Europäisches Patentamt

European Patent Office

Office européen des brevets

(11) Numéro de publication: **0 172 767**
**B1**

# (12) FASCICULE DE BREVET EUROPÉEN

(45) Date de publication du fascicule du brevet:
**25.11.87**

(21) Numéro de dépôt: **85401503.9**

(22) Date de dépôt: **22.07.85**

(51) Int. Cl.⁴: **G 03 G 19/00**

(54) Procédé et machine d'impression magnétographique.

(30) Priorité: **01.08.84 FR 8412191**

(43) Date de publication de la demande:
**26.02.86 Bulletin 86/9**

(45) Mention de la délivrance du brevet:
**25.11.87 Bulletin 87/48**

(84) Etats contractants désignés:
**BE DE GB IT NL**

(56) Documents cité:
**EP-A-0 082 739**
**EP-A-0 082 740**
**EP-A-0 082 742**
**GB-A-1 183 041**
**GB-A-1 240 675**
**US-A-3 823 406**
**US-A-3 824 601**

(73) Titulaire: **BULL S.A., 121, avenue de Malakoff,
F-75764 Paris Cédex 16 (FR)**

(72) Inventeur: **Guerin, Christophe, 23 Faubourg de
Montbéliard, F-90000 Belfort (FR)**

(74) Mandataire: **Davroux, Yves, BULL S.A. Industrial
Property Department 25 avenue de la Grande-
Armée, F-75016 Paris (FR)**

## Description

La présente invention se rapporte à un procédé d'impression magnétographique qui permet d'obtenir des images en deux couleurs sur un support d'impression. Elle concerne également une machine pour la mise en oeuvre de ce procédé.

On connaît des machines d'impression magnétographiques qui, en réponse à des signaux reçus provenant d'une unité de commande, permettent de former des images, telles que des images de caractères par exemple, sur un support d'impression constitué généralement par une bande ou une feuille de papier. Dans ces machines d'impression, qui sont analogues à celle qui a été décrite et représentée dans la demande de brevet français publiée sous le N° 2.305.764, l'impression des images est réalisée en formant d'abord, à partir des signaux reçus, une image latente magnétique sur la surface d'un élément d'enregistrement magnétique ayant généralement la forme d'un tambour rotatif ou d'une courroie sans fin, cette image latente étant constituée d'un ensemble de zones magnétisées de très petites dimensions, ces zones, pratiquement ponctuelles, étant habituellement désignées sous le nom de points magnétisés. Cette image latente est ensuite développée, c'est-à-dire rendue visible, à l'aide d'un révélateur pulvérulent qui, constitué de particules magnétiques et de pigments enrobés dans une résine thermoplastique, n'est attiré que par les zones magnétiques de l'élément d'enregistrement, formant ainsi une image de poudre à la surface de cet élément. Après quoi, cette image de poudre est transférée sur le support d'impression.

Pour certaines applications particulières, il peut être souhaitable que l'image qui est ainsi formée sur le support d'impression apparaisse en deux couleurs différentes. Dans un procédé connu qui a été notamment décrit dans le brevet français N° 1.053.634, l'impression d'une image en couleurs sur le support d'impression est réalisée en formant d'abord sur l'élément d'enregistrement une image latente magnétique correspondant aux parties d'une même couleur de l'image à imprimer, en développant ensuite cette image latente au moyen d'un révélateur ayant cette couleur, puis en transférant sur le support d'impression l'image de poudre ainsi obtenue, et en répétant cette opération autant de fois qu'il y a de couleurs dans l'image à imprimer. Un tel procédé présente cependant l'inconvénient d'exiger un temps particulièrement long pour sa mise en oeuvre. En outre, malgré tout le soin apporté pour cadrer les différentes images de poudre lors de leur transfert sur le support d'impression, il est pratiquement impossible d'éviter que des décalages, même très légers, se produisent entre les différentes parties d'images ainsi imprimées, ce qui, naturellement, nuit à la netteté de l'image finalement formée sur le support d'impression.

Pour remédier à ces inconvénients, on a proposé un procédé d'impression magnétographique, qui a été décrit dans le brevet des Etats-Unis d'Amérique N° 3.965.478, et qui consiste à former sur la surface de l'élément d'enregistrement une pluralité de zones magnétisées, l'ensemble de ces zones constituant une image latente magnétique, chacune de ces zones étant obtenue en excitant une tête d'enregistrement magnétique au moyen d'un courant électrique dont la fréquence est choisie en fonction de la couleur que cette zone doit donner lorsqu'elle est développée, les dimensions et la force d'attraction magnétique de cette zone étant d'ailleurs déterminées par la valeur de la fréquence utilisée. Dans ce procédé, le développement de l'image latente formée sur l'élément d'enregistrement est réalisé au moyen d'un seul révélateur contenant des particules de différentes couleurs et de différentes grosseurs, les particules de même grosseur étant cependant toutes d'une même couleur. Lors du développement de l'image latente, les particules qui ont une grosseur déterminée (et par conséquent une couleur donnée) sont attirées préférentiellement par les zones magnétisées dont les dimensions répondent à une force d'attraction donnée, de sorte que, après développement, chaque zone magnétisée est recouverte de particules dont la couleur correspond à la fréquence qui a été utilisée pour former cette zone magnétisée.

Pour la mise en oeuvre d'un tel procédé, il est cependant nécessaire d'utiliser un révélateur dont les particules, de différentes couleurs et de différentes grosseurs, doivent être soigneusement calibrées, les particules de même couleur devant en effet avoir toutes rigoureusement la même grosseur. De plus, ces particules doivent être conditionnées pour ne pas s'agglomérer entre elles, sous peine de provoquer des erreurs de teinte lors du développement de l'image latente magnétique. Dans ces conditions, la fabrication d'un tel révélateur est particulièrement longue, délicate et relativement coûteuse. D'autre part, étant donné que, suivant la couleur qui leur est attribuée, les zones magnétisées formées sur l'élément d'enregistrement n'ont pas toutes les mêmes dimensions, les images ou portions d'image dont la teinte correspond aux zones magnétisées de grandes dimensions présentent une définition, c'est-à-dire un degré de finesse, moins bonne que celles dont la teinte correspond aux zones magnétisées de petites dimensions. Enfin, alors que les zones magnétisées de petites dimensions sont capables, lors du développement, de n'attirer que les particules les moins grosses du révélateur, il est impossible d'empêcher que les zones magnétisées de grandes dimensions attirent, non seulement les grosses particules du révélateur, mais également les particules plus petites, ce qui, naturellement, provoque une altération des couleurs.

Afin de surmonter ces difficultés, on a proposé plusieurs procédés d'impression magnétographiques qui ont été décrits dans les demandes de brevets déposées en France par la Demanderesse le 23 Décembre 1981 et publiées sous les N° 2.518.770, 2.518.771, 2.518.772 et 2.518.773. Ces procédés permettent d'obtenir sur le support d'impression, en un temps relativement réduit, des images en couleurs de haute qualité en utilisant, pour la formation de ces images, autant de révélateurs pulvérulents qu'il y a de teintes différentes dans l'image à imprimer. Les révélateurs qui sont employés dans ces procédés sont tous constitués de particules magnétiques dures enrobées dans une résine thermoplastique contenant un pigment, et ils présentent tous la particularité de présenter à l'exception de leur teinte, les mêmes propriétés physiques, notamment le même état granulométrique, le même champ coercitif, la même induction à saturation, la même densité et le même point de fusion. On rappelle ici qu'une matière magnétique dure est une matière qui peut être magnétisée de façon permanente en dessous du point de Curie, tandis qu'une matière magnétique douce est une matière magnétique qui, lorsqu'elle est soumise à l'action d'un champ magnétique externe, ne conserve pratiquement aucune aimantation lorsqu'elle est soustraite à ce champ.

La présente invention remédie également aux inconvénients de la technique antérieure et propose un procédé d'impression magnétographique, ainsi qu'une machine utilisant ce procédé, qui permet d'obtenir sur un support d'impression, en un temps relativement réduit, des images bicolores de haute qualité, tout en n'employant que deux révélateurs présentant les mêmes propriétés physiques, à l'exception cependant de leur teinte et de leurs caractéristiques magnétiques, l'un de ces révélateurs comprenant en effet des particules magnétiques dures, alors que l'autre comporte des particules magnétiques douces.

La présente invention concerne un procède et une machine d'impression magnétographique comme revendiqués aux revendications 1 et 4.

L'invention sera mieux comprise et d'autres buts, détails eet avantages de celle-ci apparaîtront mieux dans la description suivante, donnée à titre d'exemple non limitatif et en se référant aux dessins annexés sur lesquels:
- les figures 1A à 1F: illustrent les différentes phases du procédé d'impression magnétographique selon l'invention
- la figure 2: représente un mode de réalisation d'une machine imprimante qui met en oeuvre le procédé d'impression de l'invention,
- la figure 3: est une vue de dessous de l'organe d'enregistrement magnétique qui équipe la machine représentée sur la figure 2, cette vue montrant la disposition relative des têtes d'enregistrement qui font partie de cet organe,
- la figure 4: est une vue en coupe, suivant une ligne indiquée en traits mixtes et dans le sens des flèches 4-4, de l'organe d'enregistrement représenté sur la figure 3,
- la figure 5: est une vue montrant une disposition de points magnétisés qui ont été formés sur l'élément d'enregistrement pour constituer l'image latente magnétique d'un caractère,
- les figures 6A et 6B: représentent, lorsqu'elles sont assemblées, un schéma des circuits électriques utilisés pour commander les différentes têtes d'enregistrement de la machine représentée sur la figure 2, et
- la figure 7: montre des courbes illustrant la façon dont varie la force d'attraction magnétique exercée pour chaque point magnétisé formé sur l'élément d'enregistrement faisant partie de la machine représentée sur la figure 2.

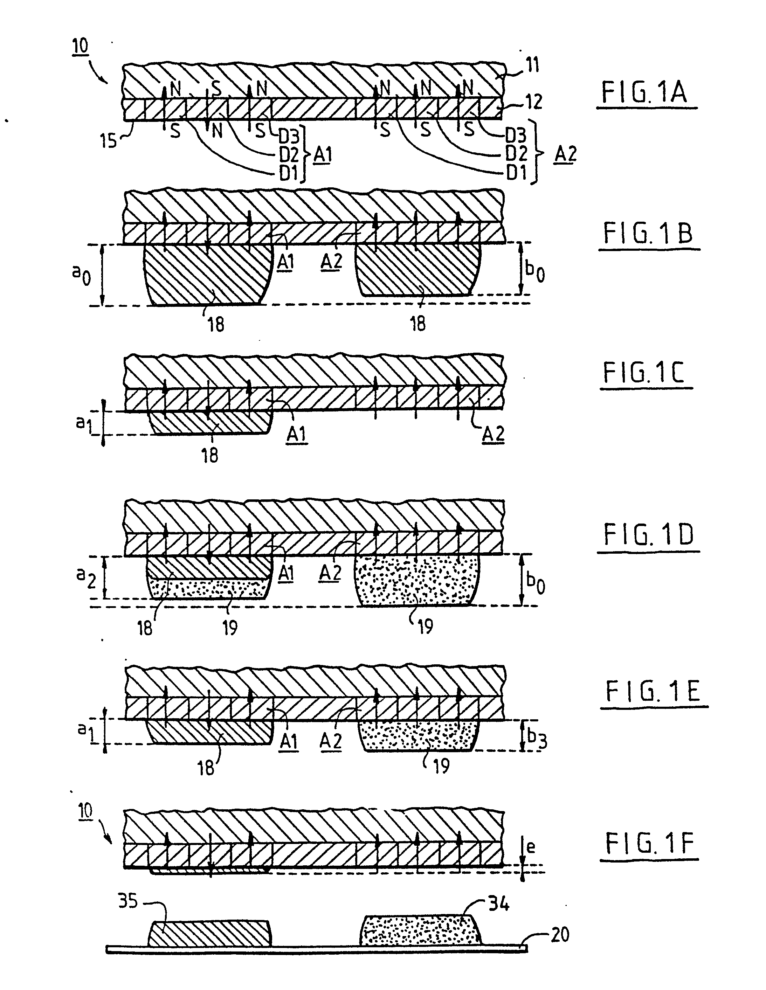

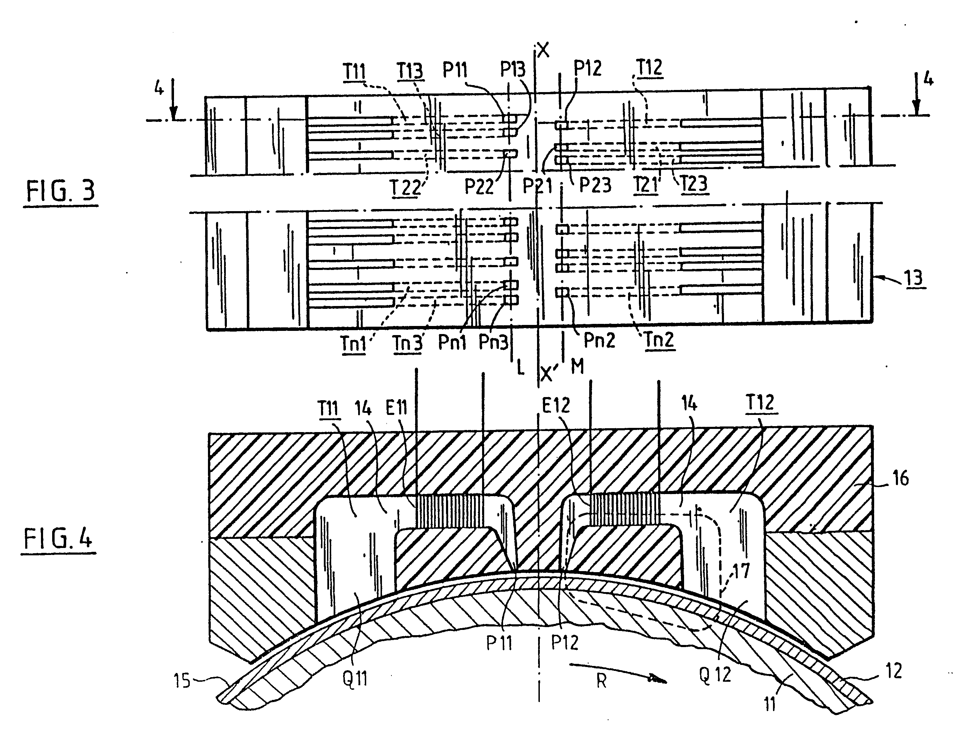

La figure 1A montre, en coupe agrandie, un élément d'enregistrement magnétique 10, de type connu, qui peut être utilisé pour la mise en oeuvre du procédé de l'invention. On considèrera, dans l'exemple décrit, que cet élément d'enregistrement magnétique est de type analogue à celui qui a été décrit et représenté dans le brevet français N° 2.402.921 et qu'il comprend un support 11 formé d'un matériau présentant une haute perméabilité magnétique, tel que le fer ou l'acier doux, ce support étant revêtu d'une couche 12 d'un matériau magnétique à haute coercivité tel que, par exemple, l'alliage magnétique nickel-cobalt. Dans le mode de mise en oeuvre du procédé d'impression selon l'invention, cet élément d'enregistrement 10, est magnétisé transversalement au moyen d'une ou de plusieurs têtes d'enregistrement de type connu. On considèrera, dans l'exemple décrit, que les têtes d'enregistrement qui ont été utilisées pour effectuer cette magnétisation sont celles qui sont représentées sur les figures 3 et 4 et qui, sur ces figures, sont désignées par les références telles que T11, T12, T13, T21 etc.... Ainsi qu'on peut le voir sur la figure 4, chacune de ces têtes comprend un mince noyau métallique 14 de forte perméabilité magnétique, sur lequel est bobiné un enroulement, tel que E11 par exemple connecté à un circuit d'excitation électrique qui sera décrit un peu plus loin. Ce noyau 14 a sensiblement la forme d'un U renversé et présente, à se's extrémités, un pôle d'enregistrement, tel que P11 par exemple, et un pôle de fermeture de flux tel que Q11. Ces deux pôles sont disposés, comme le montre la figure 4, à proximité de la surface 15 de la couche magnétique 12, de sorte que le noyau 14, le support 11 et les deux régions qui, comprises entre ce noyau et ce support, sont situées à l'aplomb du pôle d'enregistrement et du pôle de fermeture de flux, forment un circuit magnétique fermé. Il faut signaler ici que, bien que dans le cas illustré par la figure 4 les pôles d'enregistrement et de fermeture du flux se trouvent à proximité de la surface 15 de la couche magnétique 12, on pourrait adopter une autre disposition dans laquelle ces deux pôles seraient placés au contact de cette surface.

Si, dans l'enroulement de l'une des têtes d'enregistrement par exemple de la tête d'enregistrement, T12, on envoie une impulsion de courant électrique d'intensité convenable, cette impulsion crée, à l'intérieur du noyau de cette tête, un flux magnétique dont la ligne de force moyenne est représentée par la ligne en traits interrompus 17.

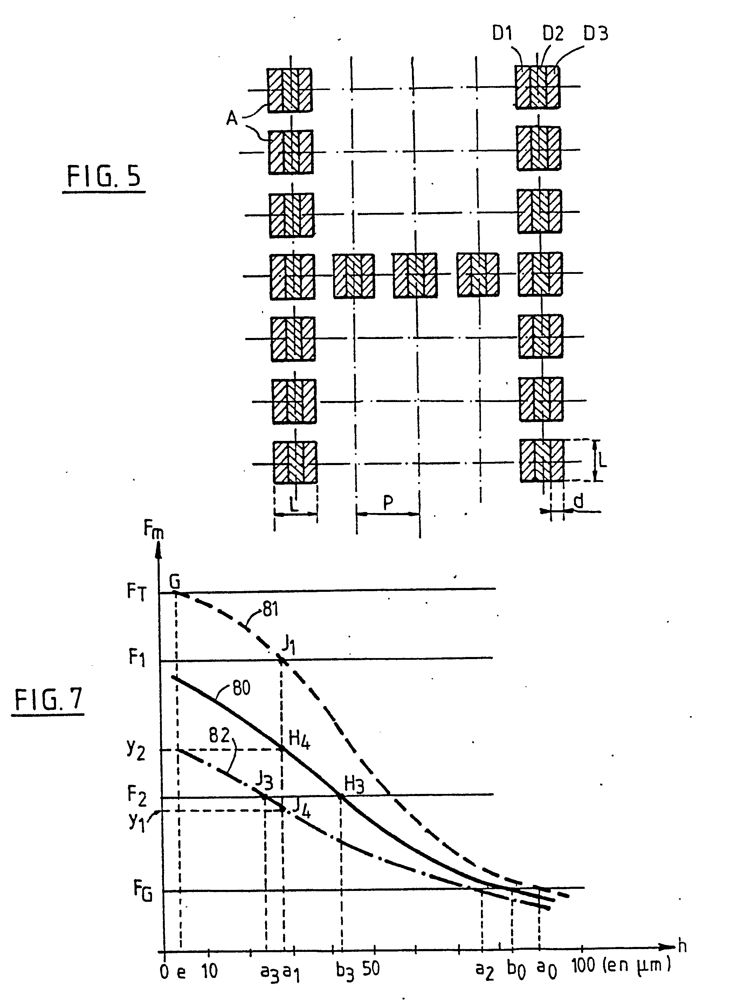

Dans la portion de la couche magnétique 12 qui se trouve à l'aplomb du pôle d'enregistrement de cette tête, le champ magnétique est perpendiculaire à la surface 15 de cette couche, si bien que, dans cette portion, la magnétisation de la couche magnétique 12 s'effectue bien perpendiculairement à cette surface. Dans cette portion, le champ magnétique créé par cette tête provoque l'apparition d'une zone magnétisée de très petites dimensions qui, dans la suite du texte, sera désignée sous le nom de domaine magnétique élémentaire, cette zone magnétisée subsistant même lorsque l'enroulement cesse ensuite d'être parcouru par un courant. Au contraire, étant donné que, comme on peut le voir sur les figures 3 et 4, les dimensions du pôle d'enregistrement de chaque tête sont très inférieures à celles du pôle de fermeture du flux de cette tête, la densité du flux magnétique sous le pôle de fermeture du flux est bien plus petite que celle du flux magnétique sous le pôle d'enregistrement. De ce fait, le flux magnétique sous le pôle de fermeture du flux ne peut, ni former de domaines magnétisés élémentaires dans la couche magnétique 12, ni modifier les domaines magnétisés élémentaires déjà formés dans cette couche. Ainsi qu'on l'a indiqué plus haut, les domaines magnétisés élémentaires qui sont ainsi formés dans la couche magnétique 12 ont de très petites dimensions. C'est ainsi que, dans l'exemple décrit, chacun de ces domaines se présente, à la surface 15 de la couche magnétique 12 sous la forme d'un très petit rectangle dont la longueur est voisine de 200 μm et dont la largeur est pratiquement égale à 70 μm. Cependant, les têtes d'enregistrement et les circuits électriques de commande de ces têtes sont établis, d'une manière qui sera indiquée plus loin, de telle sorte que ces domaines magnétisés élémentaires sont, non pas isolés les une des autres sur la surface 15, mais, au contraire, accolés les une aux autres pour constituer des groupes distincts de domaines magnétisés élémentaires, chacun de ces groupes comportant un même nombre k de domaines magnétisés élémentaires juxtaposés les une aux autres. Cependant, la disposition et le nombre k des domaines magnétisés élémentaires qui constituent chacun de ces groupes sont établis de telle sorte que chaque groupe conserve des dimensions suffisamment petites pour lui permettre d'être assimilé à une zone magnétisée pratiquement ponctuelle, les dimensions de chaque zone restant en effet inférieures à 500 μm. Pour cette raison, chaque groupe sera désigné, dans ce qui suit, sous l'appellation de point magnétisé. Il faut toutefois signaler que les points magnétisés qui sont ainsi formés sur la couche magnétique 12 ont tous la même configuration et les mêmes dimensions. C'est ainsi que, dans l'exemple de réalisation qui est illustré sur la figure 5, chaque point magnétisé, désigné par A sur cette figure, est constitué de trois domaines magnétisés élémentaires D1, D2 et D3, contigus les une aux autres, le domaine D2 étant ici encadré par les domaines D1 et D3, chacun de ces domaines ayant la forme d'un petit rectangle dont la longueur L est sensiblement égale au triple de la largeur d. C'est ainsi que, dans le cas où cette largeur est pratiquement égale à 70 μm, la longueur L de chaque domaine est sénsiblement égale à 210 μ. Dans l'exemple illustrée par la figure 5, les trois domaines magnétisés D1, D2 et D3 constitutifs d'un même point magnétisé A sont accolés les une aux autres par leur plus grand côté, de sorte que chaque point magnétisé A a pratiquement la forme d'un carré dont la longueur L du côté est sensiblement égale à 210 μm. Il faut signaler que le mode de constitution des points magnétisés A qui est illustré sur la figure 5 n'est pas exclusif de l'invention et que, dans un autre mode de réalisation, chaque point magnétisé pourrait très bien être constitué, par exemple, de quatre domaines magnétisés élémentaires ayant chacun la forme d'un carré de 100 μm de côté ces quatre domaines étant accolés les une aux autres pour constituer un point magnétisé ayant la forme d'un carré de 200 μm de côté.

Les points magnétisés qui sont ainsi formés sur la couche magnétique 12 sont répartis de manière à constituer, à la surface 15 de cette couche, une image latente magnétique ayant une configuration déterminée, par exemple la configuration d'un caractère. A titre d'illustration, on a représenté sur la figure 5 un ensemble de points magnétisés A disposés suivant une matrice rectangulaire comprenant sept lignes et cinq colonnes et répartis à l'intérieur de cette matrice de façon à constituer l'image du caractère "H". Ainsi qu'on l'a indiqué plus haut, chacun de ces points magnétisés a ici la forme d'un carré dont la longueur L du côté est sensiblement égale à 210 μm, ce carré étant formé par la juxtaposition de trois domaines magnétisés élémentaires D1, D2 et D3 ayant chacun la forme d'un rectangle dont la longueur L est sensiblement égale à 210 μm. Il faut signaler par ailleurs que le pas P d'espacement des lignes et des colonnes de la matrice selon laquelle sont placés ces points magnétisés est au moins égal à la somme L + d, c'est-à-dire à 280 μm dans l'exemple considéré. Dans ces conditions, les aimantations présentées par deux points magnétisés voisins n'ont aucune influence l'une sur l'autre.

On va maintenant décrire, en se référant aux figures 1A à 1F, le procédé qui permet d'obtenir, par voie magnétographique, une image en deux couleurs sur un support d'enregistrement, ce support étant constitué ici, par une bande de papier.

Dans la phase illustrée par la figure 1A, l'élément d'enregistrement 10 est magnétisé de façon à former à sa surface des points magnétisés qui, étant du type de ceux qui viennent d'être décrits, comportent tous le même nombre k de domaines magnétisés élémentaires. Dans le cas illustré par la figure 1A, chaque point magnétisé comporte trois domaines magnétisés élémentaires disposés de manière analogue à celle indiquée sur la figure 5. Sur la figure 1A, deux seulement de ces points magnétisés, référencés A1 et A2, ont été représentés pour des raisons de simplification mais il est entendu que le nombre de ces points magnétisés peut être absolument quelconque. Sur la figure 1A, on a également représenté les polarités magnétiques nord (N) et sud (S), ainsi que les aimantations respectives, des domaines magnétisés élémentaires D1, D2 et D3 qui constituent ces points magnétisés A1 et A2, chacune de ces aimantations étant représentée par une flèche dont la longueur est proportionnelle à la valeur de cette aimantation. On voit alors, sur la figure 1A, que les aimantations des différents domaines élémentaires ont toutes la même valeur, mais que certaines sont orientées en sens inverse des autres, de sorte que les points magnétisés qui sont formés sur la couche magnétique 12 peuvent être classés en deux types différents. Plus précisément, les points magnétisés qui, tels que A2, appartiennent au premier type se caractérisent par le fait que les domaines magnétisés D1, D2 et D3 qui les constituent ont tous des aimantations orientées dans le même sens. Au contraire, les points magnétisés qui, tels que A1, appartiennent au second type se caractérisent par le fait que les domaines magnétisés D1, D2 et D3 qui les constituent présentent des aimantations dont les sens s'inverse lorsqu'on passe de l'un de ces domaines magnétisés à un autre domaine qui lui est contigu. Dans l'exemple de réalisation illustré par la figure 1A, le sens de ces aimantations est choisi de telle sorte que les domaines magnétisés constituant les points magnétisés appartenant au premier type présentent une polarité magnétique sud (S) sur la surface 15 de l'élément d'enregistrement 10, alors que les domaines magnétisés D1, D2 et D3 qui constituent chacun des points magnétisés appartenant au second type présentent respectivement, sur cette surface 15, des polarités magnétiques sud (S), nord (N) et sud (S). D'une manière générale, les points magnétisés qui, tels que A2, appartiennent au premier type sont destinées à permettre la formation, sur le support d'impression, d'images ou de parties d'images devant apparaître en l'une de deux couleurs choisies, tandis que les points magnétisés qui, tels que A1, appartiennent au second type sont destinés à permetre la formation, sur ce support d'impression, d'images ou de parties d'images devant apparaître en l'autre couleur.

Le dispositif qui est utilisé pour former sur la couche magnétique 12 des points magnétisés appartenant à l'un ou l'autre des deux types de points précités sera décrit un peu plus loin. C'est pourquoi, on n'insistera pas davantage ici sur la manière dont ces points magnétisés sont obtenus. On indiquera simplement que, lorsque la magnétisation de la couche magnétique 12 est terminée, on dépose sur la surface 15 de cette couche un premier révélateur pulvérulent constitué de particules magnétiques douces enrobées dans une résine thermoplastique contenant un pigment dont la teinte est de l'une de deux couleurs choisies. Dans l'exemple décrit, on considèrera que ce pigment est de couleur rouge. Les particules magnétiques douces qui entrent dans la composition de ce premier révélateur sont, dans l'exemple décrit, des particules de fer, mais elles pourraient être formées d'une toute autre manière magnétique très perméable, à faible rémanence, telle que, par exemple, un permalloy ou encore une ferrite douce répondant à la formule $MO, Fe_2O_3$, dans laquelle est un métal choisi dans le groupe des métaux comprenant le manganèse, le zinc ou le nickel.

Ce premier révélateur, qui est déposé sur toute cette surface 15, n'est cependant attiré que par les points magnétisés de celle-ci, de sorte que, si on s'arrange pour éliminer ce révélateur de cette surface, à l'exception des points magnétisés, par exemple en retournant l'élément d'enregistrement 10 de manière que les particules de révélateur non soumises à l'attraction magnétique exercée par les points magnétisés retombent sous l'action de leur poids, on obtient des dépôts de révélateur uniquement sur ces points magnétisés. Dans ces conditions, chaque point magnétisé se trouve revêtu, comme le montre la figure 1B, d'une couche 18 de premier révélateur, l'épaisseur de cette couche étant plus importante que la force d'attraction magnétique exercée par le point magnétisé sur lequel cette couche est déposée est plus élevée. Il faut signaler en effet que la force avec laquelle est attirée chacune des particules de révélateur qui ont été déposées sur un même point, magnétisé dépend, non seulement du type de ce point, c'est-à-dire du sens selon lequel sont orientées, les unes par rapport aux autres, les aimantations présentées par les domaines magnétisés élémentaires qui constituent ce point, mais également de la distance h qui sépare chaque particule de ce point, ainsi que des caractéristiques physiques de ce révélateur, telles que l'état granulométrique et le pourcentage en particules magnétiques de ce révélateur. On a cependant observé que, pour un révélateur donné, la force magnétique d'attraction qui s'exerçait sur une particule de révélateur déposée sur un point magnétisé du second type, tel que A1, était plus élevée que celle qui s'exerçait sur cette particule lorsqu'elle était déposée sur un point magnétisé du premier type, tel que A2. En outre, la valeur $F_m$ de cette force magnétique est d'autant plus petite que la distance h qui sépare cette particule de ce point est plus grande, les variations de cette force magnétique en fonction de cette distance h étant illustrées par les courbes qui ont été représentées sur la figure 7. Sur cette figure 7, la courbe en traits interrompus 81 représente les variations, en fonction de h, de la force d'attraction magnétique exercée par le point magnétisé du second type A1. De même, la courbe en traits pleins 80 représente les variations, en fonction de h, de la force d'attraction magnétique exercée par le point magnétisé du premier type A2. Sur la figure 7, on a également représenté la valeur $F_G$ de la force de gravité à laquelle est soumise chaque particule de révélateur lorsque cette particule est déposée sur l'élément d'enregistrement 10, cette force de gravité s'exerçant à l'encontre de la force d'attraction magnétique. On voit, dans ces conditions, qu'il existe, pour chacun des points magnétisés A1 et A2, une valeur de la distance h pour laquelle cette force de gravité $F_G$ est équilibrée par la force d'attraction magnétique exercée pour chacun de ces points, cette valeur particulière déterminant ainsi l'épaisseur de la couche de révélateur subsistant sur ce point magnétisé. Etant donné que la force magnétique exercée par le point magnétisé A1 sur une particule située à une distance donnée de ce point A1 est plus grande que celle qu'exerce le point magnétisé A2 sur une particule située à la même distance de ce point A2, la valeur particulière $a_0$ pour laquelle la force magnétique exercée par A1 est équilibrée par la force $F_G$ est supérieure à celle $b_0$ pour laquelle la force magnétique exercée par A2 est équilibrée par $F_G$. La figure 7 montre que, dans l'exemple décrit, $a_0$ est sensiblement égal à 90 μm, tandis que $b_0$ est sensiblement egal à 83 μm, ces valeurs déterminant les épaisseurs respectives des couches 18 de premier révélateur qui sont déposées sur les points magnétisés A1 et A2.

Les points magnétisés de l'élément d'enregistrement 10 ayant été ainsi revêtus d'une couche 18 de premier révélateur, on soumet alors cet élément d'enregistrement à une opération de retouche destinée, non seulement à éliminer les particules résiduelles de premier révélateur qui subsistent en dehors des points magnétisés de cet élément, mais également à retirer toutes les particules de révélateur qui se trouvent sur les points magnétisés du premier type tels que A2. Lors de cette opération de retouche qui est réalisée, préférentiellement, par voie pneumatique (aspiration ou soufflage d'air), chacune des particules de révélateur se trouvant sur la surface 15 de la couche magnétique 12 est soumise à une force constante, de valeur $F_1$, qui s'exerce à l'encontre de la force magnetique $F_m$. Sur le diagramme de la figure 7, la valeur $F_1$ de cette force de retouche a été représentée, cette valeur $F_1$ étant choisie de manière que la droite d'ordonnée $F_1$ ne coupe que la courbe 81. Sur la figure 7, on a egalement désigné par $a_1$ l'abscisse du point d'intersection $J_1$ de la courbe 81 avec la droite d'ordonnée $F_1$. On voit ainsi que, pour les particules de révélateur qui ont été déposées sur chacun des points magnétisés du second type (tels que A1) et qui sont situées à une distance inférieure à $a_1$, la force magnétique exercée par ce point magnétisé est supérieure à la force de retouche $F_1$, de sorte que ces particules subsisteront sur ce point magnétisé. Au contraire, pour les particules de révélateur qui, sur chacun des points magnétisées du second type, soit situées à une distance supérieure à $a_1$, la force magnétique exercée par ce point magnétisé est inférieure à la force de retouche $F_1$, de sorte que ces particules seront éliminées de ce point. En conséquence, sur chacun des points magnétisés du second type (tels que A1), il subsistera une couche de premier révélateur ayant une épaisseur pratiquement égale à $a_1$. En ce qui concerne les particules de premier révélateur qui sont déposées sur chacun des points magnétisés du premier type (tels que A2), étant donné que la force magnétique exercée par chacun de ces points est toujours inférieure à la force de retouche $F_1$, ces particules ne peuvent subsister sur ces points et sont donc totalement éliminées. En définitive, à la fin de l'opération de retouche, seuls les points magnétisés du second type (tels que A1) apparaissent revêtus, comme on peut le voir sur la figure 1C, d'une couche de premier révélateur d'épaisseur $a_1$.

Lorsque l'opération de retouche que l'on vient de décrire est terminée, on dépose alors sur la surface 15 de l'élément d'enregistrement 10 un second révélateur pulvérulent constitué de particules magnétiques dures enrobées dans une résine thermoplastique contenant un pigment dont la teinte est de l'autre des deux couleurs précitées. Dans l'exemple décrit, on considèrera que ce pigment est de couleur noire. Les particules magnétiques dures qui entrent dans la composition de ce second révélateur sont, dans l'exemple décrit, des particules d'oxyde de fer magnétique $Fe_3O_4$, mais elles pourraient être formées d'une toute autre matière magnétique de haute coercivité et de forte rémanence, telle que, par exemple, un alliage de fer et de nickel contenant environ 78% de nickel, du carbure de fer, ou encore une ferrite dure repondant à la formule générale $MFeO_3$, dans laquelle M est un métal choisi dans le groupe des métaux comprenant le baryum, le strontium, le cobalt et les Terres Rares. Le dépôt de ce second révélateur est effectué dans les mêmes conditions que celles qui ont été décrites pour le dépôt du premier révélateur, avec toutefois cette différence que, les points magnétisés du second type étant maintenant revêtus d'une couche de premier révélateur, les lignes de force magnétique qui sont engendrés par le domaine magnétisé élémentaire D2 de chacun de ces points sont captées en grande partie par les particules du premier révélateur pour se reboucler au travers des domaines magnétisés élémentaires D1 et D3 contigus à ce domaine D2. Il en résulte alors un affaiblissement de la force magnétique exercée par les points magnétisés du second type, les variations de cette force magnétique, en fonction de la distance h précitée, étant représentées, sur la figure 7, par la courbe en traits mixtes 82. Il y a lieu de signaler que, comme on peut le voir sur la figure 7, cette courbe 82 est située au-dessous de la courbe 80. Dans ces conditions, l'abscisse $a_2$ du point d'intersection de la courbe 82 avec la droite d'ordonnée $F_G$ est inferieure a celle $b_0$ du point d'intersection dela courbe 80 avec cette même droite. La figure 7 montre que, dans l'exemple décrit, $a_2$ est sensiblement égal à 75 μm. En définitive, lorsque le dépôt du second révélateur sur la surface 15 est terminé, chaque point magnétisé du premier type (tel que A2) est revêtu, comme le montre la figure 1D, d'une couche 19 de second révélateur, d'épaisseur $b_0$, tandis que chaque point magnétisé du second type (tel que A1) est revêtu d'une couche 18 de premier révélateur elle-même recouverte par une couche 19 de second révélateur, l'épaisseur de l'ensemble de ces deux couches 18 et 19 étant égale à $a_2$.

Lorsque le depôt du second révélateur sur l'élément d'enregistrement 10 est terminé, on soumet cet élément d'enregistrement à une seconde opération de retouche analogue à celle qui a été décrite précédemment. Au cours de cette opération de retouche qui est réalisée, préférentiellement, par voie pneumatique, chacune des particules des deux révélateurs qui se trouvent sur la surface 15 de cet élément est soumise à une force constante, de valeur $F_2$, qui s'exerce à l'encontre de la force magnétique $F_m$. Sur le diagramme de la figure 7, la valeur $F_2$ de cette force de retouche a été représentée, cette valeur $F_2$ étant choisie, préférentiellement, de manière à rester pratiquement comprise entre les valeurs $y_1$ et $y_2$ des ordonnées respectives des points $J_4$ et $H_4$ où la droite d'abscisse $a_1$ coupe les courbes 80 et 82. La raison de ce choix résulte des considérations suivantes. En effet, si on désigne par $J_3$ le point d'intersection de la droite d'ordonnée $F_2$ avec la courbe 82 et si on considère uniquement les couches 19 de second révélateur qui sont superposées aux couchés 18 de premier révélateur, les particules de second révélateur qui, dans chacune de ces couches 19, sont situées à une distance de la surface 15 supérieure à la valeur $a_3$ de l'abscisse de ce point $J_3$ sont soumises à une force magnétique $F_m$ dont l'intensité est inférieure à celle de la force de retouche $F_2$. En conséquence, ces particules seront éliminées des endroits où elles se trouvaient. Au contraire, les particules de second révélateur qui, dans chacune de ces couches 19, sont situées à une distance de la surface 15 inférieure à cette valeur $a_3$ sont soumises à une force magnétique dont la valeur est supérieure à celle de la force $F_2$, de sorte que ces particules ne sont pas éliminées par cette force de retouche. On voit ainsi que, sur les couches 18 de premier révélateur, seules ne subsistent que les particules de second révélateur qui sont situées à une distance de la surface 15 au plus égale à $a_3$. En

conséquence, si cette valeur $a_3$ est choisie de manière à ne jamais dépasser pratiquement la valeur $a_1$ qui représente l'épaisseur de chacune des couches 18 de premier révélateur, on obtient alors une élimination pratiquement totale des particules de second révélateur sur chacune de ces couches 18. C'est ainsi que, dans l'exemple qui est illustré par le diagramme de la figure 7, la valeur de la force de retouche $F_2$ est telle que l'abscisse $a_3$ du point $J_2$ est inférieure à cette valeur $a_1$. Dans ce cas, les couches 19 du second révélateur qui se trouvaient en superposition sur les couches 18 de premier révélateur se trouvent complétement éliminées, comme le montre la figure 1E. Dans ce cas cependant, du fait que l'intensité de la force de retouche $F_2$ est inférieure à celle de la force de retouche $F_1$, aucune des particules du premier révélateur qui se trouvent encore sur les points magnétisés du second type (tels que A1) n'est éliminée par la force de retouche $F_2$, de sorte que, après cette seconde opération de retouche, chaque point magnétisé du second type reste revêtu d'une couche 18 de premier révélateur, d'épaisseur $a_1$. Si on revient maintenant à la figure 7, on voit que la droite d'ordonnée $F_2$ coupe la courbe 80 en un point $H_3$ d'abscisse $b_3$, cette courbe 80 représentant, ainsi qu'on l'a déjà mentionné, les variations, en fonction de h, de la force magnétique exercée par chaque point magnétisé du premier type. En raisonnant de la manière indiquée ci-dessus, on comprend alors que la force de retouche $F_2$ a également pour effet de réduire à la valeur $b_3$ l'épaisseur dela couche 19 de second révélateur qui se trouve sur chacun des points magnétisés du premier type (tel que A2). C'est ce que l'on voit en définitive sur la figure 1E où le point magnétisé du premier type A2 est recouvert d'une couche 19, d'épaisseur $b_3$, de second révélateur et où le point magnétisé du second type A1 est recouvert d'une couche 18, d'épaisseur $a_1$, de premier révélateur. Il faut d'ailleurs signaler que, à l'exception de leur couleur et de leurs propriétés magnétiques, ces deux révélateurs ont pratiquement les mêmes propriétés physiques, notamment le même état granulométrique, la même densité et le même point de fusion. Si on s'arrange pour que la force de retouche $F_2$ ait une valeur telle que la droite d'ordonnée $F_2$ passe sensiblement par le point d'intersection $H_4$ de la courbe 80 avec la droite d'abscisse $a_1$, on obtiendra même, sur le point magnétisé du premier type A2, une couche 19 de second révélateur dont l'épaisseur $b_3$ sera pratiquement égale à celle $a_1$ de la couche 18 de premier révélateur qui recouvre le point magnétisé du second type A1.

En définitive, avec une force de retouche dont la valeur $F_2$ reste comprise entre les valeurs $y_1$ et $y_2$ précitées, les couches de second révélateur qui étaient superposées aux couches de premier révélateur se trouvent totalement éliminées, tandis que les couches de second révélateur qui recouvrent les points magnétisés du premier type sont réduites à une épaisseur $b_3$ au moins égale à

celle $a_1$ des couches de premier révélateur qui recouvrent les points magnétisés du second type.

On peut aussi effectuer cette seconde opération de retouche avec une force de retouche dont la valeur $F_2$ est comprise entre $y_2$ et $F_1$, mais dans ce cas on obtient, sur chaque point magnétisé du premier type, une couche de second révélateur dont l'épaisseur $b_3$ est inférieure à $a_1$, l'épaisseur de cette couche étant d'autant plus faible que la valeur $F_2$ de la force de retouche se rapproche de la valeur $F_1$.

Lorsque la seconde opération de retouche que l'on vient de décrire est terminée, on amène, comme le montre la figure 1F, une bande de papier 20 destinée à être imprimée, soit à proximité de l'élément d'enregistrement 10, soit au contact de cet élément, et on réalise alors le transfert sur cette bande de papier des couches de révélateurs qui se trouvent sur les points magnétisés de cet élément. Cette opération de transfert peut d'ailleurs être effectuée de manière connue, soit en pressant la bande de papier 20 sur l'élément d'enregistrement 10, soit en utilisant des moyens magnétiques ou électrostatiques. Toutefois, on considèrera que, quel que soit le moyen utilisé pour réaliser cette opération, la force de transfert mise en oeuvre lors de cette opération conserve une valeur constante $F_T$. Sur le diagramme de la figure 7, la valeur $F_T$ de cette force a été représentée. Il faut signaler ici que cette valeur $F_T$ est choisie de manière à permettre à la totalité ou à la quasi totalité des particules qui se trouvent sur l'élément 10 d'être transférées sur la bande de papier 20. On peut bien sûr utiliser une force de transfert dont la valeur $F_T$ est telle que la droite d'ordonnée $F_T$ se trouve au-dessus de la courbe 81 et ne coupe pas cette courbe. Dans ces conditions, la totalité des particules de révélateurs est transférée sur la bande de papier 20. Mais on peut aussi choisir la valeur $F_T$ de la force de transfert de telle manière que la droite d'ordonnée $F_T$ coupe la courbe 81 en un point G dont l'abscisse e est voisine de zéro, par exemple est égale à 3 $\mu$m. Dans ce cas, presque toutes les particules de premier révélateur qui se trouvaient sur les points magnétisés du second type sont transférées sur la bande de papier 20, alors que les particules de second révélateur qui se trouvaient sur les points magnétisés du premier type sont transférées en totalité sur cette bande. En conséquence, lorsque l'opération de transfert est terminée, il subsiste, dans ce cas sur chacun des points magnétisés du second type de l'élément d'enregistrement 10, une pellicule de premier révélateur dont l'épaisseur e est pratiquement négligeable. En définitive, chaque couche 19 qui, avant le transfert recouvrait chaque point magnétisé du premier type, forme, lorsqu'elle est transférée en totalité sur la bande de papier 20, un petit tas 34 comprenant uniquement des particules du second révélateur. De même, chaque couche 18 qui, avant le transfert, recouvrait chaque point magnétisé du second type, forme lorsqu'elle est transférée en totalité ou en quasi totalité sur la bande de papier 20, un petit tas 35 comprenant uniquement des particules du premier révélateur.

Les couches de révélateur qui ont été ainsi transférées sur la bande de papier 20 sont alors soumises à une opération de fixation destinée à fixer définitivement ces couches sur le papier. Cette opération est effectuée à une température permettant aux deux révélateurs constituant ces couches d'être amenés au moins à l'état visqueux. Cependant, dans un mode préféré de mise en oeuvre du procédé, cette température est choisie de manière à provoquer la fusion des deux révélateurs, sans cependant présenter des risques d'inflammation ou de carbonisation du papier. Dans ces conditions, après cette opération de fixation, chacun des tas 34 forme sur le papier une tache ponctuelle ayant la teinte du second révélateur, c'est-à-dire noire dans l'exemple décrit, tandis que chacun des tas 35 forme sur le papier une tache ponctuelle ayant la teinte du premier révélateur, c'est-à-dire rouge dans l'exemple décrit.

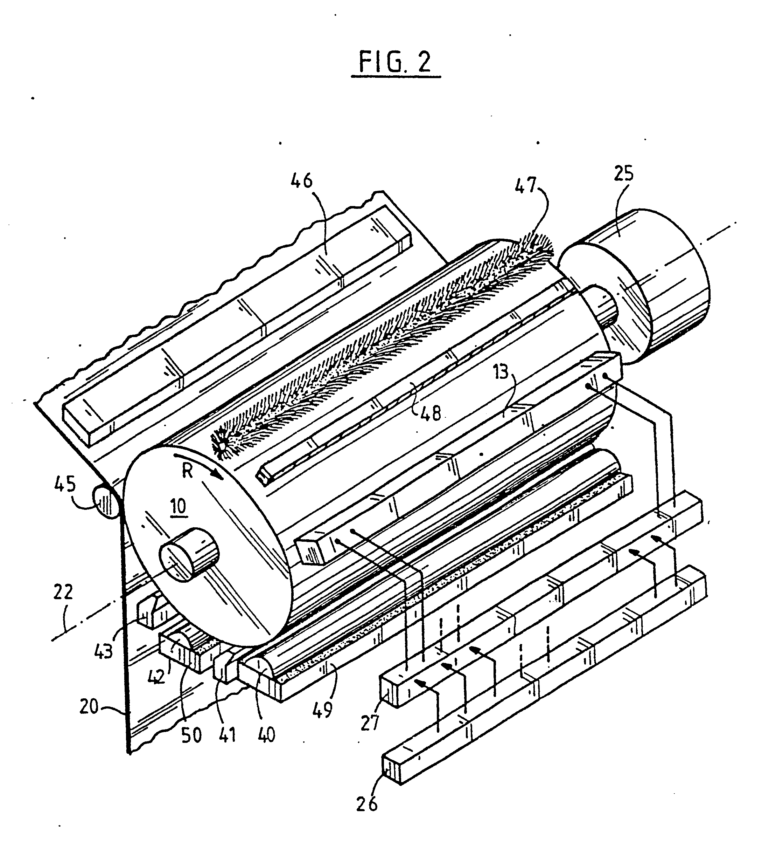

Sur la figure 2, on a représenté une machine d'impression magnétographique qui permet de réaliser une impression en deux couleurs selon le procédé d'impression qui vient d'être décrit. La machine qui est représentée sur cette figure comprend un élément d'enregistrement magnétique se présentant sous la forme d'un tambour magnétique 10 analogue à celui qui a été décrit et représenté dans le brevet français précité N° 2.402.921, ce tambour étant entraîné en rotation, dans le sens indiqué par la flèche R, par un moteur électrique 25. La magnétisation de la couche magnétique de ce tambour est assurée par un organe d'enregistrement magnétique 13 dont la structure a été représentée en détail sur les figures 3 et 4. Si on se réfère alors à ces figures, on voit que l'organe d'enregistrement 13 comporte une pluralité de têtes d'enregistrement magnétiques T11, T12, T13, T21,......,Tn1, Tn2, Tn3, montées moulées à l'intérieur d'un surmoulage 16 constitué d'une matière amagnétique telle que, par exemple, une résine thermodurcissable. Ces têtes, qui sont identiques, sont en outre séparées les unes des autres par une partie de ce surmoulage, ce qui assure le maintien rigide des têtes entre elles. Il faut signaler maintenant que, dans le cas général où chaque point magnétisé comprend k domaines magnétisés élémentaires contigus les uns aux autres, les têtes magnétiques de l'organe d'enregistrement sont, selon un mode de mise en oeuvre plus particulièrement avantageux de l'invention, arrangées de manière à constituer des groupes de têtes magnétiques comprenant chacun k têtes. C'est ainsi que, dans l'exemple décrit où chaque point magnétisé comprend trois domaines mmagnétisés élémentaires juxtaposés les une aux autres et alignés suivant une direction parallèle aux génératrices du tambour, les têtes de l'organe d'enregistrement 13 sont arrangées de façon à constituer des groupes de têtes comprenant chacun trois têtes. C'est ainsi que les trois têtes T11, T12 et T13 forment un premier groupe de têtes qui, dans la suite du texte, sera désigné sous le nom de groupe G1. De même, les trois têtes T21, T22 et T23 forment un deuxième groupe de têtes qui, dans la suite du texte, sera désigné sous le nom de groupe G2, et ainsi de suite. On comprend, dans ces conditions, que, lorsque les k têtes d'un même groupe sont excitées, d'une manière qui sera indiquée plus loin, ces k têtes forment sur la couche magnétique 12 les k domaines magnétisés élémentaires constitutifs d'un même point magnétisé.

Ainsi, par exemple, les trois têtes T11, T12 et T13 qui constituent le groupe G1 provoquent, lorsqu'elles sont excitées d'une manière qui sera expliquée plus loin, la formation, sur la couche magnétique 12, de trois domaines magnétisés élémentaires D1, D2 et D3 faisant partie d'un même point magnétisé. De même, les trois têtes T21, T22 et T23 qui constituent le groupe G2 servent à former les trois domaines magnétisés élémentaires d'un autre point magnétisé, etc..... Etant donné que, dans l'exemple décrit, ces trois domaines magnétisés élémentaires sont alignés suivant une direction parallèle aux génératrices du tambour 10, les trois têtes utilisées pour la formation de ces trois domaines pourraient être disposées de manière que leurs pôles d'enregistrement respectifs soient alignés eux aussi suivant une direction parallèle à ces génératrices. Cependant, dans le but d'éviter les effets indésirables dûs à des couplages magnétiques, les trois têtes de chaque groupe sont disposées, comme on peut le voir sur la figure 3, non pas côte-à-côte, mais de part et d'autre d'un plan XX' passant par l'axe de rotation 22 du tambour. C'est ainsi que, sur la figure 3, les têtes T11 et T13 du groupe G1 sont placées à gauche de ce plan XX', tandis que la tête T12 de ce groupe est placée à droite du plan XX'. On voit ainsi, dans l'exemple illustré par la figure 3, que les têtes qui sont placées à gauche du plan XX' sont les têtes T11, T13, T22, T31, T33,...., Tn1 et Tn3, ces têtes, parallèles entre elles, étant disposées de telle sorte que leurs pôles d'enregistrement respectifs P11, P13, P22, P31, P33,..., Pn1 et Pn3 se trouvent alignés suivant une droite L parallèle aux génératrices du tambour 10. De même, les têtes qui, dans cet exemple, sont placées à droite du plan XX' sont les têtes T12, T21, T23, T32,...., Tn2, ces têtes, parallèles entre elles, étant disposées de telle sorte que leurs pôles d'enregistrement respectifs P12, P21, P23, P32,..., Pn2 se trouvent alignés suivant une droite M parallèle aux génératrices du tambour 10. En outre, dans chaque groupe de trois têtes servant a former un même point magnétisé, les deux têtes encadrantes, telles que T11 et T13, sont écartées l'une de l'autre d'une distance égale à l'épaisseur d de chaque tête, alors que la troisième tête, telle que T12, est disposée à l'aplomb de l'intervalle qui sépare ces têtes encadrantes. On comprend, dans ces conditions, que si, à un instant donné, on excite simultanément les têtes T11 et T13 par exemple, au moyen d'une impulsion de courant électrique, il se formera, à la surface 15 de la couche magnétique 12, deux domaines magnétisés élémentaires D1 et D3 ayant chacun une largeur sensiblement égale à d, ces deux domaines étant écartés l'un de l'autre d'une distance pratiquement égale à d. Si on désigne par V la vitesse lineaire de deplacement de la couche magnétique 12 et par H l'écartement entre les deux droites L et M précitées, le temps T mis par ces deux domaines pour aller de leur position initiale sous les pôles P11 et P13 à une position située à l'aplomb du pôle P12 sera égal à H/V. Il en résulte que si, à la fin du temps T compté à partir de l'instant où les têtes T11 et T12 sont excitées, on excite la tête T12, il se forme alors, dans l'intervalle séparant les deux domaines D1 et D3 déjà formés, un troisième domaine magnétisé élémentaire D2, l'ensemble de ces trois domaines constituant ainsi un point magnétisé.

Il faut encore signaler que les têtes magnétiques de l'organe d'enregistrement se répartissent en deux catégories différentes de têtes. C'est ainsi que les têtes qui, telles que T11, T13, T21, T23,..., Tn1, Tn3, sont destinées à former des domaines magnétisés élémentaires (tels que D1 et D3), présentant toujours la même polarité magnétique (ici sud) à la surface 15 de la couche magnétique 12, appartiennent à la seconde catégorie. Au contraire, les têtes qui, telles que T12, T22,...., Tn2, sont destinées à former les domaines magnétisés élémentaires (tels que D2) présentant, soit une polarité magnétique sud, soit une polarité magnétique nord, selon que les points magnétisés dont font partie ces domaines sont du premier ou du second type, appartiennent à la première catégorie. Il y a ainsi, parmi les k têtes magnétiques d'un même groupe, p têtes de première catégorie et (k-p) têtes de seconde catégorie, p étant un nombre entier qui, dans le cas où k est pair, est égal à (k)/2 et qui, dans le cas où k est impair, est égal à (k-1)/2. C'est ainsi que, dans l'exemple décrit où k est égal à trois, il y a, dans chaque groupe de têtes, une seule tête de première catégorie et deux têtes de seconde catégorie.

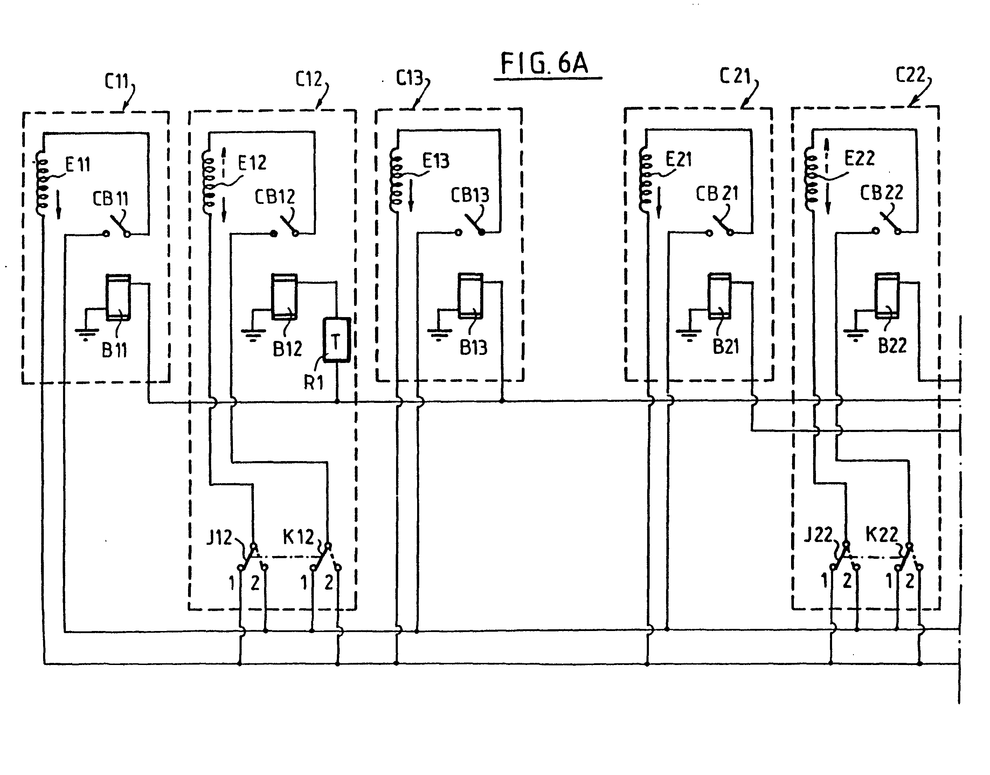

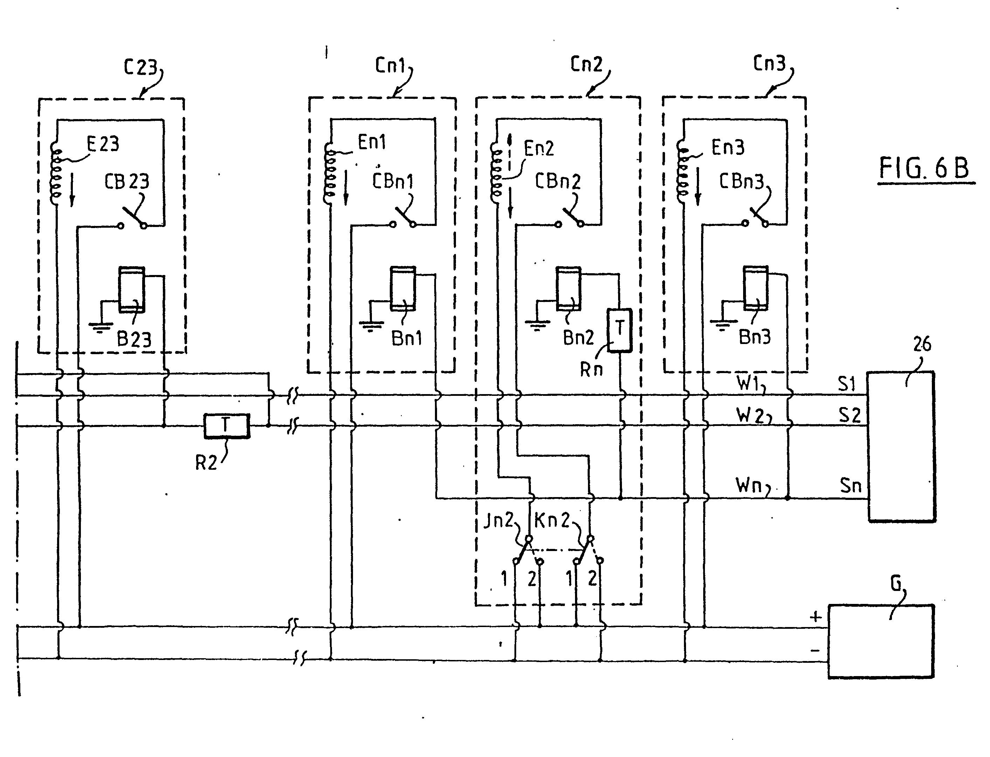

Les impulsions électriques qui servent à exciter les têtes dé l'organe d'enregistrement magnétique 13 proviennent d'une source d'impulsions 26 qui a été représentée schématiquement sur la figure 2, ces impulsions étant appliquées aux enroulements de ces têtes par l'intermédiaire d'un dispositif de commande et d'inversion de courant 27 dont la structure a été représentée en détail sur les figures 6A et 6B assemblées.

Sur les figures 6A et 6B assemblees, on n'a représenté, pour des raisons de simplification, que les enroulements E11, E12, E13, E21, E22, E23 des têtes T11, T12, T13, T21, T22 et T23 constituant les deux premiers groupes de têtes de l'organe d'enrégistrement 13, ainsi que les enroulements En1, En2 et En3 des têtes Tn1, Tn2 et Tn3 constituant le dernier groupe Gn de cet organe. Ainsi qu'on peut le comprendre en regardant les figures 6A et 6B, chacun des n enroulements E12, E22,....., En2 des têtes de première catégorie (c'est-à-dire des têtes T12, T22,..., Tn2) fait partie de l'une de n portions de circuit C12, C22,....., Cn2 associées chacune respectivement à ces n têtes de première catégorie. De même, chacun des enroulements E11, E13, E21, E23,......, En1 et En3 des têtes de seconde catégorie (c'est-à-dire des têtes T11, T13, T21, T23,...., Tn1 et Tn3) fait partie de l'une des 2n portions de circui C11, C13, C21, C23,....., Cn1 et Cn3 associées chacune respectivement à ces 2n têtes de seconde catégorie. Les n portions de circuit C12, C22,....., Cn2 comprennent en outre l'un de n premiers commutateurs ou contacts inverseurs J12, J22,......, Jn2, l'un de n seconds commutateurs ou contacts inverseurs K12, K22,....., Kn2 et l'un de n contacts de relais CB12, CB22,....., CBn2, les contacts J12, K12 et CB12 faisant partie de la portion de circuit C12, les contacts J22, K22 et CB22 faisant partie dela portion de circuit C22, etc... Dans chacune des portions de circuit C12, C22,....., Cn2, l'enroulement de la tête est connecté, à l'une de ses extrémités, à la lame de contact mobile du premier contact inverseur associé et, à l'autre extrémité à la lame de contact mobile du second contact inverseur associé, par l'intermédiaire du contact de relais associé. Chacun des contacts de relais CB12, CB22, ....., CBn2 est commandé par l'une respective de n bobines de relais B12, B22,....., Bn2. Les figures 6A et 6B montrent encore que chacun des contacts inverseurs J12, J22,......, Jn2 et K12, K22,....., Kn2 comporte deux bornes de contact désignées par les chiffres 1 et 2. La borne de contact 2 de chacun des premiers contacts inverseurs J12, J22,......, Jn2 est connecté à la borne positive (+) d'un générateur de courant G, tandis que la borne de contact 2 de chacun des seconds contacts invertseurs K12, K22,......, Kn2 est connectée à la borne négative (-) de ce générateur G. La borne de contact 1 de chacun des contacts inverseurs J12, J22,...., Jn2 est connectée à la borne négative (-) du générateur G, tandis que la borne de contact 1 de chacun des contacts inverseurs K12, K22, ...., Kn2 est connectée à la borne positive (+) du générateur G. Les figures 6A et 6B montrent que les lames de contact mobiles des deux contacts inverseurs qui, tels que J12 et K12 par exemple, font partie d'une même portion de circuit sont couplées mécaniquement afin de pouvoir être placées simultanément toutes les deux, soit sur leurs bornes de contact 1, soit sur leurs bornes de contact 2. Par ailleurs, comme on peut le voir sur les figures 6A et 6B, dans chacune des 2n portions de circuit C11, C13, C21, C23,......, Cn1 et Cn3, l'enroulement de la tête est monté en série avec l'un de 2n contacts de relais CB11, CB13, CB21, CB23,......, CBn1 et CBn3 associés chacun respectivement à chacune de ces 2n portions de circuit, chaque ensemble formé par un enroulement en série avec un contact de relais étant branché aux bornes (+) et (-) du générateur G. Chacun des contacts de relais CB11, CB13, CB21, CB23,...., CBn1 et CBn3 est commandé par l'une respective de 2n bobines de relais B11, B13, B21, B23, ...., Bn1 et Bn3.

Les bobines de relais B11, B12, B13, B21, B22, B23...., Bn1, Bn2, Bn3 peuvent être excitées sélectivement par des impulsions électriques délivrées sur les sorties S1, S2, ...., Sn de la source d'impulsions 26, chacune de ces impulsions provoquant, ainsi qu'on le verra plus loin, la formation d'un point magnétisé sur la couche magnétique. A cet effet, les bobines B11, B12 et B13 qui sont associées aux têtes magnétiques T11, T12 et T13 faisant partie du groupe G1 sont connectées à la sortie S1 de la source 26, par l'intermédiaire d'un conducteur W1. De même, les bobines B21, B22 et B23 qui sont associées aux têtes magnétiques T21, T22 et T23 faisant partie du groupe G2 sont connectées à la sortie S2 de la source 26, par l'intermédiaire d'un conducteur W2, et ainsi de suite.

La structure de la source d'impulsions 26 ne sera pas décrite ici pour la raison que cette structure est de type connu. On considèrera, dans l'exemple décrit, que cette source d'impulsions a une structure analogue à celle du dispositif de commande d'enregistrement qui a été décrit et représenté dans le brevet français N° 2.443.335. On rappelera simplement que, dans le cas où la machine qui est représentée sur la figure 2 est utilisée pour imprimer des caractères constitués chacun de points localisés l'intérieur d'une matrice rectangulaire comprenant sept lignes et cinq colonnes (comme dans l'exemple illustré sur la figure 5), les lignes de cette matrice s'étendant suivant une direction parallèle à l'axe de rotation 22 du tambour 10, l'image latente magnétique nécessaire à l'impression d'un caractère est obtenue en excitant sélectivement, à sept reprises différentes, cinq groupes de trois têtes magnétiques successives prises parmi l'ensemble des têtes magnétiques de l'organe d'enregistrement 13, cette excitation étant effectuée au moyen d'impulsions délivrées, à des instants successifs $t_1$, $t_2$, $t_3$, $t_4$, $t_5$, $t_6$ et $t_7$, sur cinq correspondantes des sorties S1 à Sn de la source d'impulsions 26. C'est ainsi, par exemple, que pour former l'image latente magnétique nécessaire à l'impression du caractère "G", au moyen de cinq groupes de têtes magnétiques comprenant, pour le premier groupe G1 les têtes T11, T12 et T13, pour le deuxième groupe G2 les têtes T21, T22 et T23, pour le troisième groupe G3 les têtes T31, T32 et T33, pour le quatrième groupe G4 les têtes T41, T42 et T43 et pour le cinquième groupe G5, les têtes T51, T52 et T53, la source d'impulsions 26 délivre:
- à l'instant $t_1$ une impulsion sur chacune de ses sorties S2 à S4, ces impulsions excitant alors les deuxième, troisième et quatrième groupes de têtes, c'est-à-dire les têtes T21, T22,...., T42 et T43,
- à l'instant $t_2$ une impulsion sur chacune de ses sorties S1 et S5, ces impulsions excitant alors les premier et cinquième groupes de têtes,

- à l'instant $t_3$ une impulsion sur sa sortie S5, cette impulsion excitant alors le cinquièéme groupe de têtes, c'est-à-dire T51, T52 et T53,

- à l'instant $t_4$ une impulsion sur chacune de ses sorties S1, S2, S3 et S5, ces impulsions excitant alors les premier, deuxième, troisième et cinquième groupes de têtes,

- à l'instant $t_5$ une impulsion sur chacune de ses sorties S1 et S5, ces impulsions excitant alors le premier et cinquième groupes de têtes,

- à l'instant $t_6$ une impulsion sur chacune de ses sorties S1 et S5, ces impulsions excitant alors les premier et cinquième groupes de têtes,

- et à l'instant $t_7$ une impulsion sur chacune de ses sorties S2 à S4, ces impulsions excitant alors les deuxième, troisième et quatrième groupes de têtes.

Les contacts inverseurs J12, J22,....., Jn2 et K12, K22,...., Kn2 qui font partie des portions de circuit C12, C22,......, Cn2 associées aux têtes de première catégorie sont destinés à déterminer le sens suivant lequel sera orientée l'aimantation du domaine magnétisé élémentaire D2 de chaque point magnétisé formé sur le tambour 10, ce sens conditionnant le type de ce point et par conséquent la couleur de la tache ponctuelle que ce point permettra de former ultérieurement sur le papier. C'est ainsi que, dans le cas où les deux contacts inverseurs d'une même portion de circuit sont placés sur leurs bornes de contact 1, le courant qui passe dans l'enroulement de la tête associée à cette portion de circuit, pendant tout le temps où le contact de relais qui est en série avec cet enroulement est fermé, circule dans cet enroulement dans le sens qui, sur les figures 6A et 6B, est indiqué par une flèche en traits pleins. On considèrera, dans l'exemple décrit, que, lorsque le courant qui passe dans un tel enroulement circule dans le sens qui, sur les ·ːΌΗres 6A et 6B, est indiqué par une flèche en ːΌːts pleins, le domaine magnétisé élémentaire D2 qui est formé dans la couche magnétique 12 par la tête munie de cet enroulement présente, à la surface de cette couche, une polarité magnétique sud (S). Au contraire, dans le cas où les deux contacts inverseurs de cette portion de circuit sont placées sur leurs bornes de contact 2, le courant qui passe dans l'enroulement de la tête associée à cette portion de circuit, pendant tout le temps où le contact de relais qui est en série avec cet enroulement est fermé, circule dans cet enroulement dans le sens qui, sur les figures 6A et 6B, est indiqué par une flèche en traits interrompus. Dans ce cas, le domaine magnnétique élémentaire D2 qui est formé dans la couche magnétique 12 par la tête munie de cet enroulement présente, à la surface de cette couche, une polarité magnétique nord (N). Il convient de remarquer que, dans les portions de circuit C11, C13, C21, C23,......, Cn1 et Cn3 qui sont associées aux têtes de seconde catégorie, le courant qui passe dans chacun des enroulements de ces têtes circule toujours dans le même sens (ce sens étant indiqué par les flèches en traits pleins), ce sens étant tel que les domaines magnétisés élémentaires D1 et D3 qui sont formés dans la couche magnétique 12 par les têtes de seconde catégorie présetent tous, à la surface de cette couche, une polarité magnétique sud (S). Dans ces conditions, étant donné que le sens decirculation du courant dans chacun des enroulements des têtes de première catégorie est déterminé par la position des contacts inverseurs de chacune des portions de circuits associées à ces têtes, on voit alors qu'en positionnant convenablement les contacts inverseurs J12, J22,....., Jn2 et K12, K22, ...., Kn2, avant que la source 26 ne délivre des impulsions sur ses sorties, on obtiendra sur le tambour 10, lorsque ces impulsions seront envoyées, des points magnétisés dont les domaines D1 et D3 présentent tous une polarité magnétique sud (S) et dont le domaine magnétique D2 présente, soit une polarité magnétique sud (S), soit une polarité magnétique nord (N). C'est ainsi, par exemple, que si, avant l'envoi des impulsions par la source 26, les contacts inverseurs J22 et K22 ont été placés sur leurs bornes de contact 2, les domaines magnétisés D1, D2 et D3 qui sont formés par les têtes T21, T22 et T23, en réponse aux impulsions délivrées par la source 26, présentent respectivement une polarité magnétique sud (S), une polarité magnétique nord (N) et une polarité magnétique sud (S) de sorte que le point magnétisé constitué par ces trois domaines est du second type.

Il y a lieu de rappeler maintenant que les pôles d'enregistrement des différentes têtes sont alignés, soit suivant la droite L, soit suivant la droite M et que de ce fait, les enroulements des têtes dont les pôles sont alignés suivant la droite M, doivent être excités avec un certain retard T par rapport aux instants d'excitation des enroulements des têtes dont les pôles sont alignés suivant la droite L, la valeur de ce retard étant égale à celle H/V qui a été définie plus haut. A cette fin, des éléments de retard R1, R2,......, Rn sont comme le montrent les figures 6A et 6B montés en série avec les bobines de relais qui sont associées aux têtes dont les pôles d'enregistrement sont alignés suivant la droite M, chacun de ces éléments étant établi de telle sorte que, en réponse à une impulsion électrique appliquée à son entrée, il délivre, au bout du temps T défini ci-dessus, une impulsion retardée à sa sortie. C'est ainsi que, dans l'exemple illustré sur les figures 6A et 6B, la bobine B12 n'est excitée que lorsque le temps T, compté à partir du moment où les bobines B11 et B13 sont excitées, s'est écoulé. De même, les bobines B21 et B23 ne sont excitées que lorsque le temps T, compté à partir du moment où la bobine B22 est excitée, s'est écoulé, et ainsi de suite. Grâce à cette disposition, chacune des impulsions délivrées par la source 26 permet d'obtenir trois domaines magnétisés D1, D2 et D3 qui, faisant partie d'un même point magnétisé, sont contigus les une aux autres et alignés suivant une même génératrice du tambour 10. Si, avant que la source 26 n'envoie des impulsions, les deux contacts inverseurs associés à la tête servant à former le domaine D2 de ce point ont été préalablement placés sur leurs bornes de contact 1, le point magnétisé que l'on obtient ainsi est du premier type. Au contraire, si ces deux contacts inverseurs ont été préalablement placés sur leurs bornes de contact 2, ce point magnétisé est alors du second type.

Le positionnement des contacts inverseurs J12, J22, ......, Jn2 et K12, K22,..., Kn2, sur l'une ou l'autre de leurs deux bornes de contact 1 et 2, peut être effectué, soit manuellement par l'opérateur avant toute opération d'impression, soit de manière entièrement automatique, ces contacts inverseurs étant, dans ce dernier cas, commandés par des moyens d'actionnement, de type connu, excités par la même unité de commande que celle qui contrôle le fonctionnement de la source d'impulsions 26. Il faut d'ailleurs signaler que, suivant les cas et applications, certains de ces contacts inverseurs peuvent être placés sur leurs bornes de contact 2, alors que d'autres sont placés sur leurs bornes de contact 1, ce qui permet, lors de l'impression d'une ligne de caractère par exemple, d'obtenir des caractères imprimés en l'une de deux couleurs, alors que les autres caractères de cette ligne sont imprimés en l'autre couleur.

Il faut encore signaler que le dispositif de commande et d'inversion de courant 27 qui a été représenté sur la figure 2 est constitué, dans l'exemple décrit, par l'ensemble comprenant les contacts inverseurs J12, J22,..., Jn2, et K12, K22,...., Kn2, les bobines B11, B12, B13, B21, B22, B23,...., Bn1, Bn2, Bn3 et leurs contacts CB11, CB12, CB13, CB21, CB22, CB23,......, CBn1, CBn2, et CBn3, les éléments de retard R1, R2,...., Rn, tous ces organes étant connectés entre eux de la manière illustrée sur les figures 6A et 6B.

Dans le cas général où chaque point magnétisé comporte k domaines magnétisés élémentaires, le dispositif de commande et d'inversion 27 comprend alors pn portions de circuit qui, associées chacune respectivement à l'une des pn têtes de première catégorie, ont une structure analogue à celle des portions C12, C22,...., Cn2, et (k-p)n portions de circuit qui, associées chacune respectivement à l'une des (k-p)n têtes de seconde catégorie ont une structure analogue à celle des portions C11, C13, C21, C23,......, Cn1 et Cn3.

Si on revient maintenant à la figure 2, on voit que la machine d'impression réalisée selon l'invention comprend encore un premier dispositif applicateur 40, de type connu, qui permet d'appliquer sur la surface du tambour 10, des particules d'un premier révélateur pulvérulent contenu dans un réservoir 49. Ainsi qu'on l'a indiqué plus haut, ce premier révélateur pulvérulent est constitué de particules magnétiques douces enrobées dans une résine thermoplastique contenant un pigment qui, dans l'exemple décrit, est de couleur rouge. Le premier dispositif applicateur 40 est disposé au-dessous du tambour 10 et il est établi de telle sorte que la couche de premier révélateur qui est ainsi déposée sur chacun des points magnétisés du premier type de ce tambour a une épaisseur sensiblement égale à 83 µm, tandis que celle qui est déposée sur chacun des points magnétisés du second type de ce tambour a une épaisseur sensiblement égale à 90 µm. Préférablement, ce dispositif applicateur 40 est du type de ceux qui ont été décrits et représentés dans les brevets français N° 2.408.462 et 2.425.941 ainsi que dans la demande de brevet français qui a été publiée sous le N° 2.521.069, ce dispositif comprenant, d'une part un élément magnétique en rotation qui amène les particules de révélateur du réservoir 49 jusqu'au voisinage de la surface du tambour 10, d'autre part un déflecteur interposé entre cet élément magnétique et le tambour pour constituer un auget dans lequel viennent s'accumuler les particules recueillies par le déflecteur, ce déflecteur laissant entre lui et le tambour une ouverture très petite, de l'ordre de 1 millimètre, par laquelle passent les particules qui sont venues s'appliquer contre la surface du tambour. Les points magnétisés du tambour 10 qui ont été ainsi revêtus d'une couche de premier révélateur passent alors devant un dispositif de retouche 41 qui permet, d'une part d'éliminer les particules de révélateur subsistant sur le tambour 10 en dehors des points magnétisés, d'autre part de retirer le premier révélateur se trouvant sur les points magnétisés du premier type. Le dispositif de retouche 41 qui est utilisé pour cette opération peut être de type électrostatique ou pneumatique. On considèrera que, dans l'exemple décrit, ce dispositif de retouche 41 est du type de celui qui a été décrit et représenté dans le brevet français N° 2.411.435 et qu'il est réglé de manière à retirer complètement les couches de premier révélateur recouvrant les points magnétisés du premier type, tout en laissant subsister sur chacun des points magnétisés de second type une couche de premier révélateur dont l'épaisseur est pratiquement égale à 27 µm. Les points magnétisés du tambour 10 qui ont subi cette opération de retouche passent alors devant un second dispositif applicateur 42, de type analogue à celui du premier dispositif applicateur, ce second dispositif applicateur permettant de déposer sur le tambour 10 des particules d'un second révélateur pulvérulent qui, étant de couleur noire dans l'exemple décrit, est contenu dans un reservoir 50. Ainsi qu'on l'a indiqué plus haut, ce second révélateur pulvérulent est constitué de particules magnétiques dures enrobées dans une résine thermoplastique contenant un pigment, ce pigment étant ici de couleur noire. Le second dispositif applicateur 42 est pratiquement disposé au-dessous du tambour 10 et il est établi de telle sorte que la couche de second révélateur qui est ainsi déposée sur chacun des points magnétisés du premier type de ce tambour a une épaisseur sensiblement égale à 83 µm, tandis que la couche de second révélateur qui est déposée en superposition sur chacune des couches de premier révélateur recouvrant les points magnétisés du second type a une épaisseur sensiblement égale à 48 µm. Etant donné que, dans l'exemple décrit, l'épaisseur de la couche de premier révélateur recouvrant les points du second type est voisine de 27 µm, l'épaisseur totale des deux couches de révélateur sur chacun des points magnétisés du second type est donc pratiquement égale à 75 µm. Les points magnétisés du tambour qui ont défilé devant le second dispositif applicateur 42, passent ensuite devant un second dispositif de retouche 43 analogue au dispositif de retouche 41. Ce dispositif de retouche 43 est réglé, dans l'exemple décrit, de manière à éliminer totalement les couches de second révélateur qui sont superposées aux couches de premier révélateur recouvrant les points magnétisés du second type, et à réduire l'épaisseur des couches de second révélateur qui recouvrent les points magnétisés du premier type sans que cette épaisseur devienne inférieure à celle $a_1$ des couches de premier révélateur sur les points magnétisés du second type. Le réglage qui est réalisé dans l'exemple décrit est tel que, après l'opération de retouche effectuée par ce dispositif 43, chacun des points magnétisés du second type est revêtu d'une couche de premier révélateur dont l'épaisseur est sensiblement égale à 27 µm, tandis que chacun des points magnétisés du premier type est revêtu d'une couche de second révélateur dont l'épaisseur est voisine de 30 µm.

Les points magnétisés du tambour 10 qui ont subi cette seconde opération de retouche sont alors mises en contact avec une bande de papier 20 qui est appliquée sur le tambour 10, comme le montre la figure 2, sous l'action exercée par un rouleau presseur 45. La force avec laquelle la bande 20 est appliquée sur le tambour 10 par le rouleau presseur 45 peut être ajustée, par des moyens connus (non représentés), de manière à provoquer un transfert pratiquement total de toutes les couches de révélateurs qui subsistent sur le tambour 10 après passage devant le dispositif de retouche 43. La valeur $F_T$ de cette force est, comme le montre la figure 7, supérieure à celle de $F_1$ dont on a parlé plus haut de sorte que, finalement les couches de premier et de second révélateurs qui étaient déposées sur les points magnétisés du tambour 10 se trouvent transférées en quasi totalité sur la bande de papier 20.

La machine qui a été représentée sur la figure 2 comporte encore un dispositif de fixation de révélateur 46 sous lequel passe la bande de papier 20 lorsque l'opération de transfert qui vient d'être décrite a été exécutée. Le dispositif de fixation 46, qui est constitué, dans l'exemple décrit, par un élément de chauffage électrique à rayons infra-rouges, est destiné à fixer de manière permanente les révélateurs qui ont été transférés sur la bande de papier 20. Il faut signaler ici que ce dispositif de fixation 46 est réglé de façon à provoquer une fusion franche des deux révélateurs, sans pour cela produire une inflammation ou même une détérioration de la bande de papier 20, la températurre de fusion de ces révélateurs étant, dans l'exemple décrit, inférieure à 140°C. Dans ces conditions, chaque tas tel que 34 forme, après avoir été fondu puis refroidi sur le papier, une tache ponctuelle ayant la teinte du second révélateur, tandis que chaque tas tel que 35 forme, après avoir été fondu puis refroidi sur le papier, une tache ponctuelle ayant la teinte du premier révélateur.

La machine représentée sur la figure 2 comprend en outre un dispositif de nettoyage qui, constitué par une brosse 47 dans l'exemple décrit, assure le nettoyage des parties de la surface du tambour 10 qui sont passées devant le poste de tranfert. Après ce nettoyage, ces parties passent devant un dispositif d'effacement 48, de type électromagnétique, qui réalise l'effacement des images magnétiques latentes portées par ces parties, de sorte que ces parties sont à nouveau capables d'être magnétisées lorsqu'elles repassent ensuite devant l'organe d'enregistrement magnétique 13.

Bien entendu, l'invention n'est nullement limitée aux modes de mise en oeuvre décrits et illustrés qui n'ont été donnés qu'à titre d'exemple. Au contraire, elle comprend tous les moyens constituant des équivalents techniques de ceux décrits et illustrés, considérés isolément ou en combinaison et mis en oeuvre dans le cadre des revendications qui suivent.

**Revendications**

1. Procédé d'impression magnétographique permettant d'obtenir sur un support d'impression une image en deux couleurs préalablement choisies, ce procédé consistant à magnétiser une couche de matériau magnétique homogène et d'épaisseur uniforme, suivant une direction perpendiculaire à la surface de cette couche, de façon à former sur cette surface un ensemble de points magnétisés distincts constituant une image latente magnétique, ces points ayant tous la même taille et appartenant chacun à l'un ou l'autre de deux types de points magnétisés se différenciant l'un de l'autre par des forces d'attraction magnétique de valeurs différentes, ce procédé consistant en outre a déposer sur cette surface un premier révélateur pulvérulent dont la teinte est celle d'une première desdites couleurs, ce révélateur ne restant appliqué que sur les points magnétisés de cette surface, à éliminer ensuite ce révélateur de cette surface, à l'exception des points magnétisés appartenant au second type, puis à déposer sur cette surface un second révélateur pulvérulent dont la teinte est celle de la seconde desdites couleurs, à eliminer ensuite ce second révélateur de cette surface, à l'exception des points magnétisés appartenant au premier type, chacun de ces derniers points étant ainsi recouvert d'une seule couche dudit second révélateur tandis que chacun des points magnétisés du second type est recouvert d'une seule couche dudit premier révélateur, et à effectuer enfin un transfert de toutes ces couches de révélateurs sur le support d'impression, ce procédé étant caractérisé en ce que, pour réaliser ladite image latente, il consiste à former sur ladite surface des points magnétisés constitués chacun d'un même nombre k, au moins égal à deux, de domaines magnétisés élémentaires contigus les une aux autres, ces domaines magnétisés présentant tous des intensités d'aimantation de même amplitude, les domaines magnétisés constitutifs des points magnétisés du premier type ayant tous la même polarité magnétique, alors que ceux constituant chacun des points du second type ont une polarité magnétique qui alterne lorsqu'on passe de l'un de ces domaines à un autre domaine qui lui est adjacent.

2. Procédé d'impression magnétographique selon revendication 1, caractérisé en ce qu'on utilise, en tant que premier révélateur, un révélateur comprenant un constituant ferromagnétique constitué de particules magnétiques douces, et en tant que deuxième révélateur, un révélateur comprenant un constituant ferromagnétique constitué de particules magnétiques dures.

3. Procédé d'impression magnétographique selon l'une quelconque des revendications 1 et 2, caractérisé en ce que chaque point magnétisé est constitué de trois domaines magnétisés élémentaires ayant chacun la forme d'un petit rectangle dont la longueur est sensiblement le triple de la largeur, ces trois domaines étant juxtaposés les uns aux autres pour former un point magnétisé ayant pratiquement la forme d'un carré.

4. Machine d'impression magnétographique pour la mise en oeuvre du procédé selon la revendication 1, comprenant un élément d'enregistrement (10) pourvu d'une surface d'enregistrement magnétique, un organe d'enregistrement magnétique (13) commandé par des impulsions électriques et établi pour, en réponse à ces impulsions, magnétiser ladite surface d'enregistrement suivant une direction perpendiculaire à celle-ci, pour former sur cette surface un ensemble de points magnétisés (A) constituant une image latente magnétique, ces points ayant tous la même taille et appartenant chacun à l'un ou à l'autre de deux types de points magnétisés se différenciant l'un de l'autre par des forces d'attraction magnétique de valeurs différentes, des moyens d'entrainement (25) pour provoquer un déplacement relatif entre l'élément d'enregistrement et l'organe d'enregistrement, une source d'impulsions (26) établie pour envoyer sélectivement des impulsions électriques audit organe d'enregistrement, un premier dispositif applicateur (40) permettant de déposer sur ladite surface d'enregistrement un premier révélateur pulvérulent ayant la teinte de l'une de deux couleurs préalablement choisies, un second dispositif applicateur (42) placé, par rapport au sens de déplacement de cette surface, en aval du premier dispositif applicateur (40) et établi pour déposer sur cette surface un second révélateur pulvérulent ayant la teinte de l'autre desdites couleurs, ces révélateurs ne restant appliqués que sur les points magnétisés de cette surface pour former une image de poudre, un premier dispositif de retouche (41) disposé entre lesdits premier et second dispositifs applicateurs (40 et 42) et établi pour retirer ledit premier révélateur de la surface d'enregistrement, à l'exception des points magnétisés appartenant au second type, un second dispositif de retouche (43) disposé en aval dudit second dispositif applicateur (42) et établi pour retirer ledit second révélateur de cette surface, à l'exception des points magnétisés appartenant au premier type et un poste de transfert (45) pour transférer cette image de poudre sur un support d'impression (20), ladite machine étant caractérisée en ce qu'elle comprend en outre:

- une pluralité de têtes magnétiques (T11, T12, etc...) faisant partie de l'organe d'enregistrement magnétique (13) et disposées de manière à permettre la formation, sur la surface d'enregistrement d'un ensemble de points magnétisés (A) constitués chacun d'un nombre k, au moins égal à deux, de domaines magnétisés élémentaires (D1, D2, D3) contigus les une aux autres et présentant la même intensité d'aimantation,

- des moyens de commande et d'inversion de courant (27) interposés entre les têtes magnétiques et la source d'impulsions (26) pour inverser sélectivement le sens du courant des impulsions envoyées par cette source et permettre la formation sur la surface d'enregistrement, de points magnétisés appartenant soit à un premier type dans lequel les domaines élémentaires ont tous la même polarité magnétique, soit à un second type dans lequel la polarité magnétique alterne lorsqu'on passe d'un domaine à un autre domaine qui lui est adjacent, de sorte que, après leur passage devant ledit second dispositif de retouche, chacun des points du premier type est recouvert d'une seule couche dudit second révélateur, tandis que chacun des points du second type est recouvert d'une seule couche dudit premier révélateur, ces deux révélateurs formant ainsi une image de poudre en deux couleurs sur la surface d'enregistrement.

5. Machine d'impression magnétographique selon revendication 4, caractérisée en ce que, chaque tête magnétique étant établie pour, chaque fois qu'elle est excitée, former un domaine magnétisé élémentaire sur la surface d'enregistrement, les têtes magnétiques de l'organe d'enregistrement (13) sont arrangées selon n groupes (G1, G2...., Gn) comprenant chacun k têtes magnétiques (telles que T11, T12, T13 par exemple pour le groupe G1), ces k têtes se répartissant en p têtes de première catégorie (telles que T12) destinées à former des domaines magnétisés élémentaires présentant, soit une polarité magnétique nord (N), soit une polarité magnétique sud (S), et en (k-p)têtes de seconde catégorie (telles que T11 et T13) destinées à former des domaines magnétisés élémentaires présentant tous la même polarité magnétique, p étant un nombre entier qui, dans le cas où k est pair, est égal à k/2, et qui, dans le cas où k est impair, est égal à (k-1)/2.

6. Machine d'impression magnétographique selon revendication 5, caractérisée en ce que, chaque tête magnétique (telle que T11 par exemple) comportant un enroulement (tel que E11) bobiné autour d'un noyau (14), les moyens de commande et d'inversion de courant (27) comprennent:

- pn portions de circuit (C12, C22,..., Cn2) associées chacune respectivement à l'une des pn têtes de première catégorie, chacune de ces portions de circuit comprenant:

+ un contact de relais (tel que CB 12) monté en série avec l'enroulement de la tête associée et actionné par une bobine (telle que B12) excitée sélectivement par les impulsions envoyées par la source d'impulsions (26),

+ un premier commutateur (tel que J12) comportant deux positions (1, 2) et une lame de contact mobile connectée à l'une des extrémités de l'ensemble formé par ledit enroulement (E12) en série avec ledit contact de relais (CB12),

+ et un second commutateur (tel que K12) comportant deux positions (1, 2) et une lame de contact mobile connectée à l'autre extrémité de l'ensemble formé par ledit enroulement (E12) en série avec ledit contact de relais (CB12) ce second commutateur étant couplé au premier commutateur de sorte que les lames de contact mobiles de ces deux commutateurs occupent des positions identiques,

- (k-p)n portions de circuit (C11, C13, C21, C23,....., Cn1, Cn3) associées chacune respectivement à l'une des (k-p)n têtes de seconde catégorie, chacune de ces portions de circuit comprenant un contact de relais (tel que CB11) monté en série avec l'enroulement de la tête associée et actionné par une bobine (telle que B11) excitée sélectivement par les impulsions envoyées par la source d'impulsions (26),

- et un générateur de courant (G) ayant, d'une part sa borne négative (-) connectée à la première (1) des deux positions de chacun des pn premiers commutateurs, et à la seconde (2) des deux positions de chacun des pn seconds commutateurs d'autre part sa borne positive (+) connectée à la seconde (2) des deux positions de chacun des pn premiers commutateurs et à la première (1) des deux positions de chacun des pn second commutateurs, ces deux bornes (+) et (-) étant en outre connectées respectivement à chacune des deux extrémités de l'ensemble constitué, dans chacune desdites (k-p)n portions de circuit, par un enroulement en série avec un contact de relais.

7. Machine d'impression magnétographique selon l'une quelconque des revendications 4 à 6, caractérisée en ce que les têtes magnétiques (T11, T12, etc...) sont placées de telle manière que leurs pôles d'enregistrement respectifs (P11, P12, etc....) se trouvent alignés suivant au moins une droite (L ou M) orientée perpendiculairement à la direction de deplacement relatif de l'élément d'enregistrement.

8. Machine d'impression magnétographique selon l'une quelconque des revendications 4 à 6 caractérisée en ce que les têtes magnétiques (T11, T12, etc...) sont placées de telle manière que leurs pôles d'enregistrement respectifs (P11, P12,...) se trouvent alignés suivant deux droites (L, M) orientées perpendiculairement à la direction de déplacement relatif de l'élément d'enregistrement et de telle sorte que, lorsque le pôle d'enregistrement (par exemple P12) d'une tête magnétique se trouve sur l'une (M) desdites droites, le pôle à d'enregistrement (P13 par exemple) de la tête magnétique suivante se trouve sur l'autre (L) de ces droites.

9. Machine d'impression magnétographique selon revéndication 8, caractérisée en ce que les moyens de commande et d'inversion de courant (27) comprennent en outre des éléments de retard (R1, R2, etc...) disposés de façon à assurer la transmission, avec un retard T, des impulsions qui, engendrées par la source d'impulsions (26) sont destinées à exciter les têtes magnétiques dont les pôles d'enregistrement sont alignés suivant celle (M) des deux droites (L, M) qui est située en aval de l'autre (L) par rapport au sens de déplacement relatif de l'élément d'enregistrement, ce retard T étant égal au rapport H/V, dans lequel H représente l'écartement entre lesdites droites (L et M) et V représente la vitesse linéaire de déplacement relatif dudit élément d'enregistement.

**Patentansprüche**

1. Magnetographisches Druckverfahren zum Herstellen eines Bildes in zwei vorher gewählten Farben auf einem Druckträger, wobei dieses Verfahren daraus besteht, eine Schicht aus einem magnetischen, homogenen Material und von gleichmäßiger Dicke in einer zur Oberfläche dieser Schicht senkrechten Richtung zu magnetisieren, so daß auf dieser Schicht eine Menge magnetisierter, voneinander abgesetzter Punkte gebildet wird, die ein latentes magnetisches Bild bilden, wobei diese punkte alle dieselbe Größe haben und je zu der einen oder der anderen Art magnetisierter Punkte gehören, die sich voneinander durch magnetische Anziehungskräfte unterschiedlichen Betrags unterscheiden, wobei dieses Verfahren weiterhin darin besteht, auf diese Oberfläche einen ersten, pulverförmigen Entwickler aufzubringen, dessen Farbton derjenige der ersten der beiden Farben ist, wobei dieser Entwickler nur auf den magnetisierten punkten dieser Oberfläche aufgetragen bleibt, daraufhin den Entwickler von dieser Oberfläche zu entfernen, mit Ausnahme der magnetisierten Punkte, die zur zweiten Art gehören, dann auf diese Oberfläche einen zweiten pulverförmigen Entwickler aufzubringen, dessen Farbton derjenige der zweiten Farbe ist, anschließend den zweiten Entwickler von dieser Oberfläche zu entfernen, mit Ausnahme der magnetisierten Punkte, die zur ersten Art gehören, wobei somit jeder der letztgenannten Punkte von einer einzigen schicht des zweiten Entwicklers bedeckt wird, wogegen jeder der magnetisierten Punkte der zweiten Art von einer einzigen Schicht des ersten Entwicklers bedeckt wird, und schließlich die Übertragung aller dieser Entwicklerschichten auf den Druckträger auszuführen, wobei dieses Verfahren dadurch gekennzeichnet ist, daß es, um das latente Bild zu erzeugen, daraus besteht, auf der Oberfläche magnetisierte punkte zu bilden, die je aus einer gleichen Anzahl k, mindestens gleich 2, aneinander angrenzender magnetisierter Elementargebiete bestehen, wobei diese magnetisierten Gebiete je Magnetisierungsstärken gleicher Amplitude aufweisen, und wobei die magnetisierten Gebiete, die die magnetisierten punkte der ersten Art bilden, je gleiche magnetische Polung haben, wogegen diejenigen, die die Punkte der zweiten Art bilden, eine magnetische Polung haben, die beim Übergang von einem Gebiet zu einem anderen, ihm benachbarten, wechselt.

2. Magnetographisches Druckverfahren nach Anspruch 1, dadurch gekennzeichnet, daß als erster Entwickler ein Entwickler mit einem ferromagnetischen Bestandteil aus leicht magnetisierbaren Teilchen und als zweiter Entwickler ein Entwickler mit einem ferromagnetischen Bestandteil aus schwer magnetisierbaren Teilchen verwendet wird.

3. Magnetnographisches Druckverfahren nach einem der Ansprüche 1 und 2, dadurch gekennzeichnet, daß jeder magnetisierte Punkt aus drei magnetisierten Elementargebieten gebildet wird, die je die Form eines kleinen Rechtecks haben, dessen Länge im wesentlichen das Dreifache der Breite ist, wobei diese drei Gebiete aneinandergelegen sind, um einen magnetisierten Punkt zu bilden, der praktisch die Form eines Quadrats hat.

4. Magnetographische Druckmaschine zum Ausführen des Verfahrens nach Anspruch 1 mit einem Aufnahmeelement (10), das mit einer magnetischen Aufnahmeoberfläche ausgestattet ist, einem magnetischen Aufnahmeorgan (13), das durch elektrische Impulse betätigt wird und dazu bestimmt ist, abhängig von diesen Impulsen, die Aufnahmeoberfläche in einer zu ihr senkrechten Richtung zu magnetisieren, um auf dieser Oberfläche eine Menge magnetisierter Punkte (A) herzustellen, die ein latentes magnetisches Bild bilden, wobei diese Punkte alle dieselbe Größe haben und je zur einen oder anderen Art magnetisierter Punkte gehören, die sich voneinander durch magnetische Anziehungskräfte unterschiedlichen Betrags unterscheiden, Antriebsmitteln (25) zum Bewirken einer relativen Lageveränderung zwischen dem Aufnahmeelement und dem Aufnahmeorgan, einer Impulsquelle (26) zum selektiven Senden elektrischer Impulse zum Aufnahmeorgan, einer ersten Auftragevorrichtung (40) zum Aufbringen eines ersten pulverförmigen Entwicklers, der den Farbton einer der beiden vorher gewählten Farben hat, auf die Oberfläche, eine zweite Auftragevorrichtung (42), die in der Bewegungsrichtung der Oberfläche hinter der ersten Auftragevorrichtung (40) liegt und zum Auftragen eines zweiten pulverförmigen Entwicklers mit dem Farbton der anderen der beiden Farben auf die Oberfläche dient, wobei diese Entwickler nur auf den magnetisierten Punkten der Oberfläche aufgetragen bleiben, um ein pulverförmiges Bild zu erzeugen, einer ersten Nachbehandlungsvorrichtung (41) zwischen der ersten und der zweiten Auftragevorrichtung (40 und 42) zum Entfernen des ersten Entwicklers von der Aufnahmeoberfläche, mit Ausnahme der zur zweiten Art gehörigen Punkte, einer zweiten Nachbehandlungsvorrichtung (43), flußabwärts der zweiten Auftragevorrichtung (42) gelegen und zum Entfernen des zweiten Entwicklers von der Oberfläche, mit Ausnahme der zur ersten Art gehörigen Punkte, und einer Übertragsstelle (45) zum Übertragen des pulverförmigen Bildes auf einen Druckträger (20), wobei die Maschine dadurch gekennzeichnet ist, daß sie weiterhin folgende Bestandteile enthält:

> - mehrere Magnetköpfe (T11, T12, usw.), die Teil des magnetischen Aufnahmeorgans (13) und so angeordnet sind, daß sie das Bilden einer Menge magnetisierter Punkte (A) auf der Aufnahmeoberfläche ermöglichen, die je aus einer Anzahl k, mindestens gleich 2, magnetisierter Elementargebiete (D1, D2, D3) gebildet sind, die aneinander anliegen und die gleiche Magnetisierungsstärke aufweisen,

- Mittel zum Steuern und Umkehren des Stroms (27), die zwischen den Magnetköpfen und der Impulsquelle (26) gelegen sind, zum selektiven Umkehren der Stromrichtung der von der Quelle gesendeten Impulse und zum Bilden magnetisierter Punkte auf der Aufnahmeoberfläche, die entweder zu einer ersten Art gehören, in der die Elementargebiete alle die gleiche Polung haben, oder zu einer zweiten Art gehören, in der die magnetische Polung beim Übergang von einem zu einem anderen, ihm benachbarten Gebiet wechselt,

so daß nach dem Vorbeilauf an der zweiten Nachbehandlungsvorrichtung jeder Punkt der ersten Art mit einer einzigen Schicht des zweiten Entwicklers bedeckt ist, wogegen jeder Punkt der zweiten Art mit einer einzigen Schicht des ersten Entwicklers bedeckt ist, wodurch die beiden Entwickler ein pulverförmiges, zweifarbiges Bild auf der Aufnahmeoberfläche erzeugen.

5. Magnetographische Druckmaschine nach Anspruch 4, dadurch gekennzeichnet, daß, da jeder Magnetkopf dazu eingerichtet ist, jedesmal, wenn er angeregt wird, ein magnetisiertes Elementargebiet auf der Aufnahmeoberfläche zu bilden, die Magnetköpfe des Aufnahmeorgans (13) in n Gruppen (G1, G2,... Gn) mit je k Magnetköpfen (wie T11, T12, T13 z. B. für die Gruppe G1) angeordnet sind, wobei sich diese k Köpfe auf p Köpfe der ersten Kategorie (wie T12) zum Bilden eines magnetisierten Elementargebiets mit entweder einer magnetischen Nordpolung (N) oder einer magnetischen Südpolung (S) und auf (k-p) Köpfe der zweiten Art (wie T11 und T13) verteilen, die magnetisierte Elementargebiete bilden sollen, die alle dieselbe magnetische Polarität aufweisen, wobei p eine ganze Zahl ist, die, falls k gerade ist, gleich k/2 und, falls k ungerade ist, gleich (k-1)/2 ist.

6. Magnetographische Druckmaschine nach Anspruch 5, dadurch gekennzeichnet, daß jeder Magnetkopf (wie z. B. T11) eine um einen Kern (14) gewickelte Wicklung (wie E11) enthält und die Mittel zum Betätigen und Umkehren des Stroms (27) folgender Bestandteile enthalten:

- pn Schaltkreisteile (C12, C22,..., Cn2), die jeweils mit einem der pn Köpfe der ersten Kathegorie verbunden sind, wobei jeder dieser Schaltkreisteile folgende Bestandteile enthält:

+ einen Relaiskontakt (wie CB12), der mit der Wicklung des Kopfes in Reihe geschaltet ist und mit einer Spule (wie B12) verbunden ist und von ihr betätigt wird, wobei diese Spule wahlweise durch von der Impulsquelle (26) gesandte Impulse angeregt wird,

+ einen ersten Schalter (wie J12) mit zwei Stellungen (1, 2) und einer beweglichen Kontaktzunge, die mit einem der Enden der Baugruppe verbunden ist, die aus der Wicklung (E12) in Reihe mit dem Relaiskontakt (CB12) gebildet ist,

+ und einem zweiten Schalter (wie K12) mit zwei Stellungen und einer beweglichen Kontaktzunge, die an das andere Ende der Baugruppe angeschlossen ist, die aus der Wicklung (E12) in Reihe mit dem Relaiskontakt (CB12) gebildet ist, wobei der zweite Schalter mit dem ersten Schalter so gekoppelt ist, daß die beweglichen Kontaktzungen der beiden Schalter gleiche Stellungen einnehmen,

- (K-p)n Schaltkreisteile (C11, C13, C21, C23,..., Cn1, Cn3), die jeweils mit einem der (k-p)n Köpfe der zweiten Kategorie verbunden sind, wobei jeder dieser Schaltkreisteile einen Relaiskontakt (wie CB11) enthält, der mit der Wicklung des Kopfs in Reihe geschaltet ist und mit einer Spule (wie B11) verbunden ist und von ihr betätigt wird, die wahlweise durch von der Impulsquelle (26) gesandte Impulse angeregt wird,

- und einen Stromerzeuger (G), dessen negativer Anschluß (-) einerseits an die erste (1) der beiden Stellungen jedes der pn ersten Schalter und an die zweite (2) der beiden Stellungen jedes der pn zweiten Schalter angeschlossen ist und dessen positiver Anschluß (+) andererseits an die zweite (2) der beiden Stellungen jedes der pn ersten Schalter undan die erste (1) jedes der pn zweiten Schalter angeschlossen ist, wobei die beiden Anschlüsse (+) und (-) außerdem jeweils an jedes der beiden Enden der Baugruppe angeschlossen sind, die in jedem der (k-p)n Schaltkreisteile durch eine Wicklung in Reihe mit einem Relaiskontakt gebildet wird.

7. Magnetographische Druckmaschine nach einem der Ansprüche 4 bis 6, dadurch gekennzeichnet, daß die Magnetköpfe (T11, T12, usw.) so angeordnet sind, daß sich ihre jeweiligen Aufnahmepole (P11, P12, usw.) auf mindestens einer Geraden (L oder M) befinden, die senkrecht zur relativen Bewegungsrichtung des Aufnahmeelements orientiert ist.

8. Magnetographische Druckmaschine nach einem der Ansprüche 4 bis 6, dadurch gekennzeichnet, daß die Magnetköpfe (T11, T12, usw.) so angebracht sind, daß sich ihre entsprechenden Aufnahmepole (P11, P12,...) auf zwei Geraden (L, M) aufgereiht befinden, die senkrecht zur relativen Bewegungsrichtung des Aufnahmeelements orientiert sind, und so angebracht sind, daß, wenn sich der Aufnahmepol (z. B. P12) eines Magnetkopfs auf einer (M) der Geraden befindet, sich der Aufnahmepol (z. B. P13) des nächsten Magnetkopfes auf der anderen (L) der Geraden befindet.

9. Magnetographische Druckmaschine nach Anspruch 8, dadurch gekennzeichnet, daß die Mittel zum Steuern und Umkehren des Stroms (27) außerdem Verzögerungselemente (R1, R2, usw.) enthalten, die so angebracht sind, daß die Übertragung mit einer Verzögerung T der Impulse erzielt wird, die von der Impulsquelle (26) erzeugt werden und dazu dienen, die Magnetköpfe der Aufnahmepole anzuregen, die auf derjenigen (M) der beiden Geraden (L, M) aufgereiht sind, die sich stromabwärts der anderen (L) bezüglich der Relativbewegungsrichtung des Aufnahmeelements befindet, wobei diese Verzögerung T gleich dem Verhältnis H/V ist, wobei H den Abstand zwischen den Geraden (L und M) und V die Lineargeschwindigkeit der Relativbewegung des Aufnahmeelements darstellt.

**Claims**

1. A magnetographic copying process enabling an image in two previously selected colours to be obtained on a print carrier, this process consisting in magnetising a layer of homogenous magnetic material of uniform thickness along a direction perpendicular to the surface of this layer, in such a manner as to form on this surface a series of separate magnetic dots forming a latent magnetic image, these dots all having the same size and each appertaining to the one or the other of two kinds of magnetised dots differing one from another by magnetic attraction forces of different values, this process moreover consisting in depositing on to this surface a first pulverulent developer of which the hue is that of a first one of the said colours, this developer only remaining applied on the magnetised dots of this surface, in thereupon removing this developer from this surface except for the magnetised dots appertaining to the second kind, then in depositing on to this surface a second pulverulent developer of which the hue is that of the second of the said colours, in thereupon removing this second developer from this surface except for the magnetised dots appertaining to the first kind, each of these latter dots thus being coated with a single layer of the said second developer whereas each of the magnetised dots of the second kind is coated with a single layer of the said first developer, and in finally performing a transfer of all these layers of developers on to the print carrier, this process being characterised in that in order to produce the said latent image, it consists in forming on the said surface magnetised dots each consisting of one and the same number k, at least equal to two, of elementary magnetised areas contiguous to each other, these magnetised areas all having magnetisation intensities of the same magnitude, the magnetised areas forming magnetised dots of the first kind all having the same magnetic polarity, whereas those forming each of the dots of the second kind have a magnetic polarity which alternates upon passing from one of these areas to another adjacent to the former.

2. A magnetographic copying process according to claim 1, characterised in that the first developer utilised is a developer comprising a ferromagnetic component formed by soft magnetic particles, and the second developer utilised is a developer comprising a ferromagnetic component formed by hard magnetic particles.

3. A magnetographic printing process according to either of claims 1 and 2, characterised in that each magnetised dot comprises three elementary magnetic areas each having the shape of a small rectangle of which the length is substantially triple the width, these three areas being in mutual juxtaposition to form a magnetised dot practically having the form of a square.

4. Magnetographic copying machine for carrying out the process according to claim 1, comprising a recording element (10) provided with a magnetic recording surface, a magnetic recording member (13) controlled by means of electrical pulses and arranged so that in response to these pulses it magnetises the said recording surface in a direction perpendicular to the same, in order to form a series of magnetised dots (A) on this surface constituting a latent magnetic image, these dots all having the same size and each appertaining to the one or the other of two kinds of magnetised dots differing one from another by magnetic attraction forces of different values, driving means (25) for effecting a relative displacement between the recording element and the recording member, a source (26) of pulses arranged for selective transmission of electrical pulses to the said recording member, a first applicator device (40) by means of which it is possible to deposit on the said recording surface a first pulverulent developer having the hue of the one of the two previously selected colours, a second applicator device (42) positioned downstream of the first applicator device (40) with respect to the direction of displacement of this surface and arranged for depositing on to this surface a second pulverulent developer having the hue of the other of the said colours, these developers remaining applied only on the magnetised dots of this surface in order to form a powder image, a first retouching device (41) located between the said first and second applicator devices (40 and 42) and arranged to remove the said first developer from the recording surface, except for the magnetised dots appertaining to the second kind, a second retouching device (43) situated downstream of the said second applicator device (42) and arranged to remove the said second developer from this surface except for the magnetised dots appertaining to the first kind and a transfer station (45) for the transfer of this powder image on to a print carrier (20), the said machine being characterised in that it also comprises:

- a plurality of magnetic heads (T11 ,T12, etc...) forming part of the magnetic recording member (13) and arranged in such manner as to permit the formation on the recording surface of a series of magnetised dots (A) each comprising a number k, at least equal to two, of elementary magnetised areas (D1, D2, D3) which are mutually contiguous and have the same intensity of magnetisation,

- current control and reversal means (27) interposed between the magnetic heads and the source (26) of pulses for selective reversal of the direction of the flow of the pulses transmitted by this source and to permit the formation on the recording surface of magnetised dots appertaining either to a first kind in which the elementary areas all have the same magnetic polarity, or to a second kind in which the magnetic polarity alternates upon passing from one area to another area adjacent to the former, so that after having passed before the said second retouching device, each of the dots of the first kind is coated with a single layer of the said second developer, whereas each of the dots of the second kind is coated with a single layer of the said first developer, these two developers thereby forming a powder image in two colours on the recording surface.

5. Magnetographic printing machine according to claim 4, characterised in that with each magnetic head being arranged to produce an elementary magnetised area on the recording surface every time it is energised, the magnetic heads of the recording member (13) are arranged in n groups (G1, G2....,Gn) each comprising k magnetic heads (such as T11, T12, T13 for example, in the case of group G1), these k heads being divided into p heads of the first kind (such as T12) intended to produce elementary magnetised areas which have either a north magnetic polarity (N) or a south magnetic polarity (S), and into (k-p) heads of the second kind (such as T11 and T13) intended to form elementary magnetised areas which all display the same magnetic polarity, p being an integer which in the case where k is even is equal to k/2, and which in the case where k is odd, is equal to (k-1)/2.

6. Magnetographic printing machine according to claim 5, characterised in that with each magnetic head (such as T11 for example) having a coil (such as E11) wound around a core (14), the current control and reversal means (27) comprise:
- pn circuit portions (C12, C22,.....Cn2) each associated respectively with one of the pn heads of the first kind, each of these circuit portions comprising:
  + a relay contact (such as CB12) connected in series with the winding of the associated head and actuated by a coil (such as B12) energised selectively by means of the pulses transmitted by the source (26) of pulses,
  + a first switch (such as J12) having two positions (1, 2) and a movable contact blade connected to one of the extremities of the assembly formed by the said winding (E12) in series with the said relay contact (CB12), + and a second switch (such as K12) having two positions (1, 2) and a movable contact blade connected to the other extremity of the assembly formed by the said winding (E12) in series with the said relay contact (CB12), this second switch being coupled with the first switch in such a manner that the movable contact blades of these two switches occupy identical positions,
- (k-p)n circuit portions (C11, C13, C21, C23....,Cn1, Cn3), each being associated respectively with one of the (k-p)n heads of the second kind, each of these circuit portions comprising a relay contact (such as CB11) connected in series with the winding of the associated head and actuated by means of a coil (such as B11) energised selectively by means of the pulses transmitted by the source (26) of pulses,
- and a current generator (G) which on the one hand has its negative terminal (-) connected to the first (1) of the two positions of each of the pn first switches, and on the other hand is connected to the second (2) of the two positions of each of the pn second switches, its positive terminal (+) being connected to the second (2) of the two positions of each of the pn first switches and to the first (1) of the two positions of each of the pn second switches, these two terminals (+ and -) furthermore being connected respectively to each of the two extremities of the assembly formed in each of the said (k-p)n circuit portions, via a winding in series with a relay contact.

7. Magnetographic printing machine according to any one of claims 4 to 6, characterised in that the magnetic heads (T11, T12, etc...) are so arranged that their respective recording poles (P11, P12, etc...) are aligned along at least one straight line (L or M) oriented perpendicular to the direction of relative displacement of the recording element.

8. Magnetographic printing machine according to any one of claims 4 to 6, characterised in that the magnetic heads (T11, T12, etc...) are arranged in such a manner that their respective recording poles (P11, P12,...) are aligned along two straight lines (L, M) oriented perpendicular to the direction of relative displacement of the recording element and in such manner that when the recording pole (for example P12) of a magnetic head is situated on one (M) of the said straight lines, the recording pole (P13, for example) of the following magnetic head is situated on the other (L) of these straight lines.

9. Magnetographic printing machine according to claim 8, characterised in that the current control and reversal means (27) furthermore comprise delay elements (R1, R2, etc...) positioned in such a manner as to assure the transmission with a delay T of the pulses which are generated by the source (26) of pulses and are intended to energise the magnetic heads of which the recording poles are aligned along that (M) of the two straight lines (L, M) which is situated downstream of the other (L) with respect to the relative direction of displacement of the recording element, this delay T being equal to the ratio H/V, in which H represents the distance between the said straight lines (L and M), and V represents the linear speed of relative displacement of the said recording element.

FIG.1A

FIG.1B

FIG.1C

FIG.1D

FIG.1E

FIG.1F

# FIG. 2

FIG. 3

T11  T13  P11  P13  X  P12  T12

4

4

T22  P22  P21  P23  T21  T23

13

Tn1  Tn3  Pn1  Pn3  Pn2  Tn2

L  X  M

0 172 767

FIG. 4

T11  14  E11  E12  14  T12

16

17

P11  P12

15  Q11  Q12  11  12

R

FIG. 5

D1 D2 D3

A

L

P

L

d

FIG. 7

$F_m$

$F_T$ G

81

$F_1$ $J_1$

80

82 $H_4$

$y_2$

$J_3$ $H_3$

$F_2$

$y_1$ $J_4$

$F_G$

0 e 10 $a_3$ $a_1$ $b_3$ 50 $a_2$ $b_0$ $a_0$ 100 (en μm) h

7

FIG. 6A

0172767

FIG. 6 B